(19) Europäisches Patentamt
European Patent Office
Office européen des brevets

(11) EP 4 130 011 A2

# (12) DEMANDE DE BREVET EUROPEEN

(43) Date de publication:
**08.02.2023 Bulletin 2023/06**

(21) Numéro de dépôt: **22196050.3**

(22) Date de dépôt: **22.12.2017**

(51) Classification Internationale des Brevets (IPC):
***C07F 5/00*** *(1968.09)* ***C07F 5/06*** *(1968.09)*
***H01M 10/052*** *(2010.01)* ***H01M 10/0525*** *(2010.01)*
***H01M 10/0567*** *(2010.01)*

(52) Classification Coopérative des Brevets (CPC):
**H01M 10/052; C07F 5/003; C07F 5/069;**
**H01M 10/0525; H01M 10/0567;** H01M 2300/0025;
Y02E 60/10

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2016 CA 2953163**

(62) Numéro(s) de document de la (des) demande(s) initiale(s) en application de l'article 76 CBE:
**17832975.1 / 3 559 008**

(71) Demandeur: **SCE France**
**64170 Lacq (FR)**

(72) Inventeurs:
- **MORIZUR, Vincent**
  **64000 PAU (FR)**
- **HAYS, Pauline**
  **40300 PEYREHORADE (FR)**
- **DELABOISSIERE, Arthur**
  **33700 MERIGNAC (FR)**
- **PARVOLE, Julien**
  **64000 PAU (FR)**
- **PAILLET, Sabrina**
  **64230 LESCAR (FR)**
- **ZAGHIB, Karim**
  **LONGUEUIL, 2006 (CA)**

(74) Mandataire: **Lavoix**
**Bayerstraße 83**
**80335 München (DE)**

Remarques:
Cette demande a été déposée le 16.09.2022 comme demande divisionnaire de la demande mentionnée sous le code INID 62.

## (54) COMPOSÉS À BASE D'UN ÉLÉMENT DE LA FAMILLE DU BORE ET LEUR UTILISATION DANS DES COMPOSITIONS D'ÉLECTROLYTES

(57) Des composés à base d'un élément du Groupe IIIA (colonne 13) du tableau périodique des éléments, par exemple, le bore, l'aluminium, le gallium ou l'indium, sont ici décrits ainsi que leurs procédés de préparation et leur utilisation comme sels et/ou additifs, par exemple, en combinaison à d'autres sels dans des compositions d'électrolytes pour cellules électrochimiques, entre autres, dans des compositions d'électrolyte en présence d'un solvant liquide et/ou d'un polymère solvatant, l'électrolyte étant sous forme liquide, gel ou solide.



Processed by Luminess, 75001 PARIS (FR)

## Description

### DEMANDE RELIÉE

La présente demande revendique la priorité, sous la loi applicable, de la demande de brevet canadienne no 2,953,163 déposée le 23 décembre 2016, le contenu de laquelle est incorporé ici par référence dans son intégralité et à toutes fins.

### DOMAINE TECHNIQUE

La présente demande concerne des composés à base d'un élément de la famille du bore, leurs procédés de préparation et leur utilisation comme sels et/ou additifs dans des compositions d'électrolytes.

### ÉTAT DE LA TECHNIQUE

Une batterie lithium-ion comprend une électrode négative, une électrode positive, un séparateur et un électrolyte. L'électrode négative et l'électrode positive étant constituées d'un ou deux matériaux actifs (insertion et désinsertion du lithium), d'un mélange de conducteurs électroniques, d'un polymère utilisé pour lier les particules entre elles et adhérer sur le collecteur de courant (le plus souvent aluminium ou cuivre). L'électrolyte est constitué d'un ou plusieurs sels de lithium dissous dans un solvant liquide (généralement mélange de carbonates organiques) ou dans un solvant polymère. Des additifs peuvent être ajoutés dans la solution d'électrolyte pour améliorer la résistance de la batterie à la température, au haut-voltage, à la corrosion de l'aluminium, etc.

Les batteries au lithium-ion pour les voitures électriques et autres appareils électriques qui sont disponibles aujourd'hui utilisent le plus souvent des électrolytes liquides à base d'hexafluorophosphate de lithium ($LiPF_6$) dans un mélange de carbonates. La popularité de ce sel est principalement due à la formation d'une couche de passivation sur l'aluminium (collecteur de courant le plus utilisé pour les cathodes). Cependant, $LiPF_6$ présente une instabilité thermique mais également une instabilité chimique puisqu'il peut réagir avec une espèce protique (ex : $H_2O$, etc.) pour former un gaz toxique, très agressif et indésirable, le fluorure d'hydrogène (HF). Même si toutes les précautions sont prises pour éviter le contact de $LiPF_6$ avec une espèce protique, il existe un haut risque, ce qui implique une dégradation de la batterie d'où une durée de vie diminuée et des problèmes potentiels de sécurité. De plus le coût de ce sel reste relativement élevé. Ces inconvénients majeurs ont encouragé la recherche de sels ayant de meilleures propriétés électrochimiques, thermiques, chimiques et autres, en remplacement du $LiPF_6$.

Différents sels ont été proposés comme candidats pour remplacer $LiPF_6$. Ces sels présentent néanmoins des inconvénients qui limitent ou empêchent leur utilisation. Par exemple, l'hexafluoroarsenate de lithium ($LiAsF_6$), en raison de la toxicité des dérivés d'arsénique et de ses produits de dégradation, ne peut pas être utilisé. Autre exemple, le perchlorate de lithium ($LiClO_4$) est un sel très réactif, pouvant exploser dans des conditions oxydantes abusives. Le (trifluorométhylsulfonyle)imide de lithium (LiTFSI), quant à lui, provoque la corrosion de l'aluminium du collecteur de courant. Des sels à base de bore ont également été proposés, comme le tétrafluoroborate de lithium ($LiBF_4$), lequel a été critiqué à cause de sa faible conductivité et sa solubilité limitée dans les carbonates présente tout de même l'avantage d'être peu coûteux et peu sensible à l'humidité et, donc, plus sûr. L'(oxalato)borate de lithium (LiBOB), qui présente de nombreux avantages comme une haute stabilité électrochimique et thermique (293 °C), génère quant à lui des gaz lorsque les cathodes à base de $LiCoO_2$ sont utilisées. Au vu des propriétés chimique, électrochimique et thermique, ainsi que leur stabilité à l'humidité, les sels de lithium à base de bore ont été développés ces dernières années et plus particulièrement les borates et les boroxines.

Généralement, des borates sont préparés en mettant en jeu un alcool, un acide carboxylique, ou un diacide carboxylique, mais également des molécules multifonctionnelles acide carboxyliquealcool à partir de $B(OR)_3$ ou Ar-$B(OR)_2$ (J. Power Sources, 2014, 247, 813; J. Phys. Chem., 2009, 113, 5918; J. Electrochem. Soc., 1998, 145, 2813). La préparation de borates lithiés a été obtenue en mettant en jeu un nucléophile (alcool) ou un acide carboxylique en présence d'une base lithiée telle que LiOH, $Li_2CO_3$, ou Li par exemple (J. Electrochem. Soc., 1996, 143, 3572) et d'un composé à base de bore: $B(OMe)_3$, $LiBF_4$ et $BF_3$.

La préparation de boroxines est, quant à elle, généralement réalisée par déshydratation de $ArB(OH)_2$ ou $ArOB(OH)_2$, pour obtenir respectivement $(BOAr)_3$ ou $B(O(OAr)_3$ (J. Power Sources, 2014, 247, 813, J. Phys. Chem., 2009, 113, 5918, J. Am. Chem. Soc., 2013, 135, 10990). Pour ce type de réaction, l'acide borique substitué ($ArB(OH)_2$ ou $ArOB(OH)_2$) doit être préparée au préalable, la préparation de boroxines se faisant donc en deux étapes. L'ajout d'une boroxine comme triméthyleboroxine (TMB) dans une composition d'électrolytes, à une concentration de 0,5 à 1 % massique a permis d'améliorer les propriétés électrochimiques de l'électrolyte. Le TMB est oxydé préférentiellement et forme un SEI sur la cathode. Il a été montré que l'ajout d'une boroxine pouvait améliorer les conductivités ioniques, ainsi que la rétention de la capacité (J. Electro. Soc., 2014, 161, 2255; Electrochem. Comm., 2013, 28, 20; Electrochemica

Acta, 2015, 173, 804).

Afin d'améliorer la durée de vie des batteries et leur sécurité, il est crucial d'améliorer les propriétés (comme la stabilité thermique, électrochimique, à l'humidité, etc.) des électrolytes existants, en développant de nouveaux sels et/ou additifs pour les compositions d'électrolyte.

**SOMMAIRE**

Selon un premier aspect, la présente demande concerne des composés à base d'un élément de la famille du bore. Par exemple, les composés sont de Formule I ou II, et/ou leurs sels :

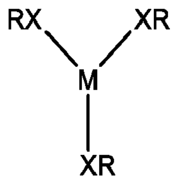

Formule I

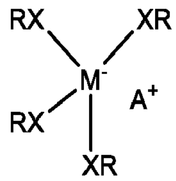

Formule II

dans lesquelles :

M est un atome choisi parmi dans les éléments de la colonne 13 (Groupe IIIA) du tableau périodique des éléments, par exemple, un atome de bore, d'aluminium, de gallium, d'indium ou de thallium, par exemple un atome de bore, d'aluminium, de gallium ou d'indium, ou encore un atome de bore ou d'aluminium ;

X est indépendamment choisi parmi O, S, NH, NR, ou un groupe C(O)O ou $S(O)_2O$, où ledit groupe est attaché à M par un atome d'oxygène ;

R est indépendamment choisi parmi les groupes substitués ou non substitués alkyle linéaire ou ramifié, cycloalkyle et aryle, ou 2 ou 3 groupes R combiné avec les radicaux X qui y sont rattachés forme un cycle ayant de 5 à 7 chainons comprenant M, ou un groupe bicyclique ayant de 7 à 10 chainons comprenant M, et/ou au plus un XR est un groupe hydroxyle ; et $A^+$ est un cation métallique ou un cation d'une base organique, et où le ratio molaire total de $A^+$ par rapport au reste de la molécule est ajusté afin d'atteindre l'électroneutralité.

Selon un mode de réalisation, $A^+$ est un cation métallique, par exemple, choisi parmi les cations des éléments Li, Na, K, Rb, Cs, Be, Mg, Ca, Sr, Ba, Al, Zn, Cu, Sc, Y, Fe, Co, Ni, Ti, Sn, V, Cr, or Mn. Selon un mode de réalisation, $A^+$ est un cation d'un métal alcalin ou alcalino-terreux ($Li^+$, $Na^+$, $K^+$, $Rb^+$, $Cs^+$, $Be^{2+}$, $Mg^{2+}$, $Ca^{2+}$, $Sr^{2+}$, et $Ba^{2+}$), par exemple, $A^+$ est $Li^+$.

Selon un autre mode de réalisation, $A^+$ est un cation organique, par exemple, choisi parmi ammonium, alkylammonium, dialkylammonium, trialkylammonium, tétraalkylammonium, triarylammonium, tricycloalkylammonium, tétracycloalkylammonium, imidazolium, 1,3-dialkylimidazolium, 4,5-dicyanoimidazolium, N-alkylpyrrolidinium, N-alkylpiperidinium, oxoniums, trialkyloxonium, sulfoniums, trialkylsulfonium, triarylsulfonium, tricycloalkylsulfonium, phosphoniums, tétraalkylphosphonium, tétraarylphosphonium, tétracycloalkylphosphonium, trialkylphosphonium, triarylphosphonium, tricycloalkylphosphonium, trialkylsélénium, tétraalkylarsonium, et d'autres bases similaires. Selon un autre mode de réalisation, $A^+$ est un cation organique d'une base organique, par exemple, choisie parmi la triméthylamine, triéthylamine, tripropylamine, tributylamine, N-alkylpyrrolidine, N-alkylmorpholine, *N*-méthylimidazole, 4,5-dicyanoimidazole, pyridine, picoline, lutidine, quinoline, *N,N*-diméthylaniline, diisopropyléthylamine, quinuclidine, triméthylphosphine, et d'autres bases organiques similaires.

Selon un mode de réalisation, le composé de Formule I est choisi parmi les composés Formules I(a), I(b1), I(b2) et I(c), et/ou leurs sels :

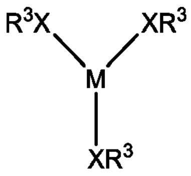
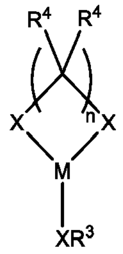
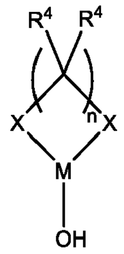
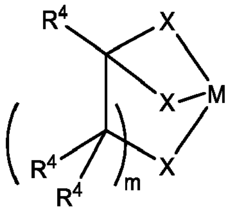

I(a) I(b1) I(b2) I(c)

dans lesquelles X, M, sont tels que définis précédemment,

$R^3$ est un groupement substitué ou non substitué choisi parmi les alkyles linéaires ou ramifiés, les cycloalkyles et les aryles ;

$R^4$ est, indépendamment à chaque instance, choisi parmi hydrogène, halogène, et les groupements substitués ou non substitués alkyle linéaire ou ramifié, cycloalkyle et aryle, ou les groupes $R^4$ combinés avec les atomes de carbone qui y sont rattachés forment un groupe cycloalkyle mono ou bicyclique ou un aryle, et où n est différent de 1 lorsque X est O ou NH à chaque instance ;

n est un nombre entier choisi parmi 1, 2, 3 et 4 ; et

m est un nombre entier choisi parmi 0, 1, et 2.

Selon un mode de réalisation, le composé de Formule II est choisi parmi les composés Formules II(a), II(b1), II(b2) et II(c) et/ou leurs sels :

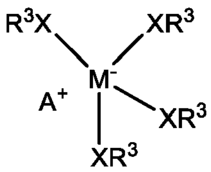
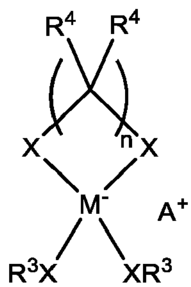
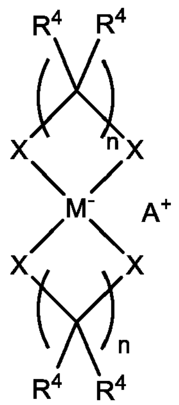
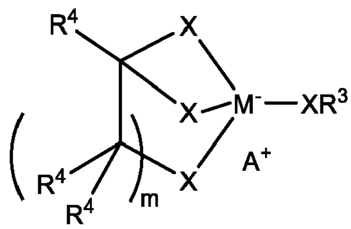

II(a) II(b1) II(b2) II(c)

dans lesquelles X, M, $R^3$, $R^4$, $A^+$, n et m sont tels que définis précédemment.

Selon un mode de réalisation, le composé est de Formule III, et/ou ses sels :

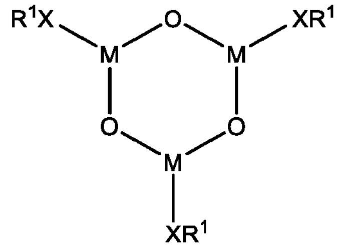

Formule III

dans laquelle M et X sont tels que définis précédemment; et

$R^1$ est indépendamment choisi parmi les groupes substitués ou non substitués alkyle linéaire ou ramifié, cycloalkyle et aryle.

Selon l'un des modes de réalisation ci-dessus, au moins un groupement X du composé est un groupe C(O)O ou $S(O)_2O$. Par exemple, au moins un groupement X est un groupe $S(O)_2O$. Dans certains modes de réalisation, tous les groupements X du composé liés à l'atome M sont des groupes $S(O)_2O$.

Selon l'un des modes de réalisation ci-dessus, le composé est tel que décrit et M est un atome de bore. Selon un autre mode réalisation, M est un atome d'aluminium. Selon encore un autre mode réalisation, M est un atome de gallium. Selon encore un autre mode réalisation, M est un atome d'indium.

Selon un exemple, le composé de Formule I tel qu'ici décrit, est choisi parmi les composés suivants :

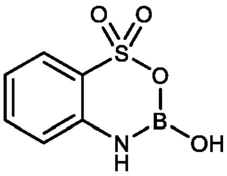
;

Composé A1

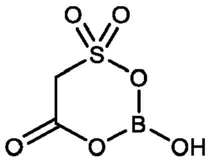
;

Composé A2

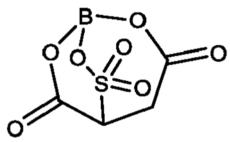
;

Composé A3

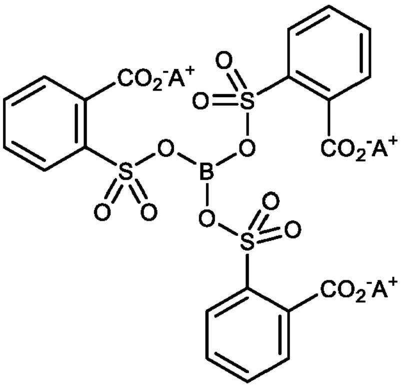
;

Composé A4

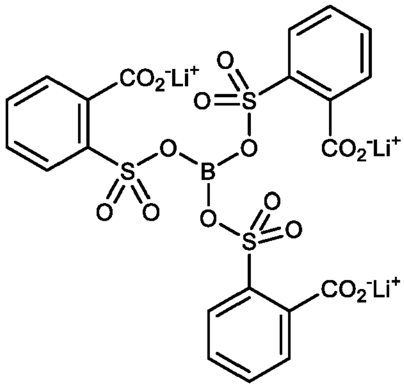
;

Composé A5

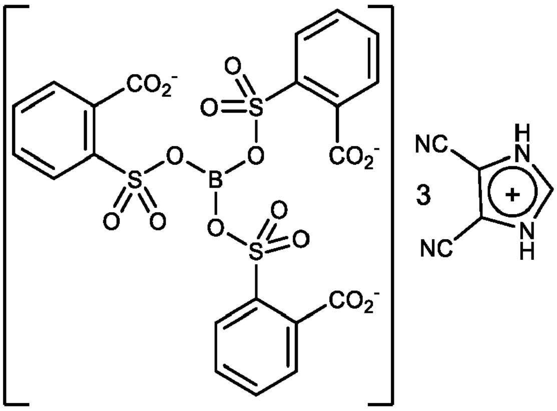
;

Composé A6

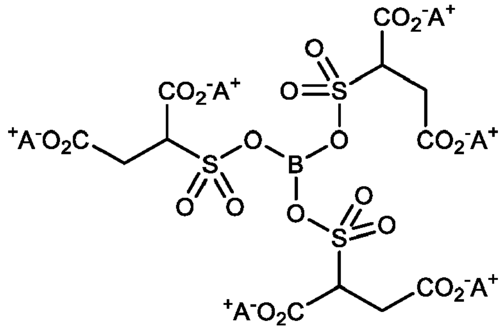
;

Composé A7

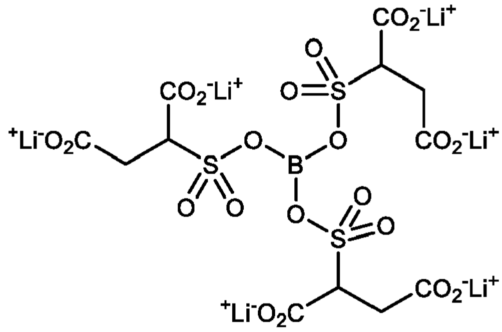
;

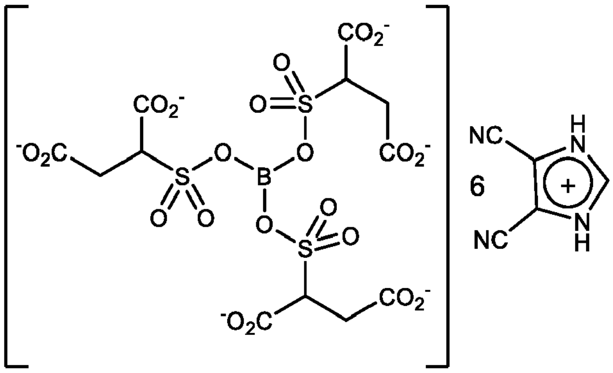

Composé A8

Composé A9

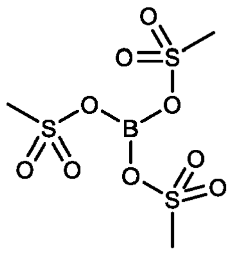
;

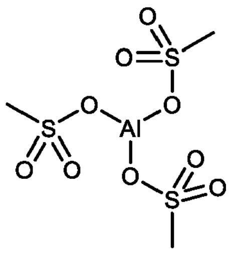
;

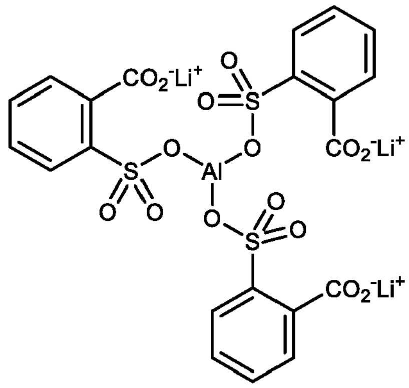

Composé A10

Composé A11

Composé A12

où A+ est tel que défini précédemment.

Selon un autre exemple, le composé de Formule II tel qu'ici décrit, est choisi parmi les composés suivants :

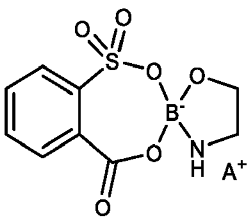
;

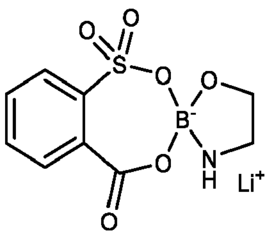
;

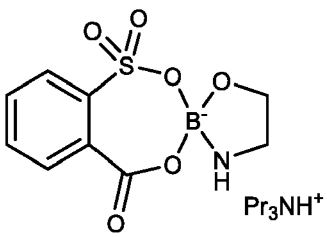
;

Composé B1

Composé B2

Composé B3

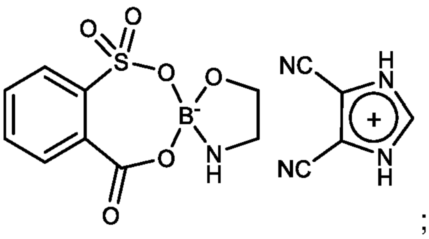
;

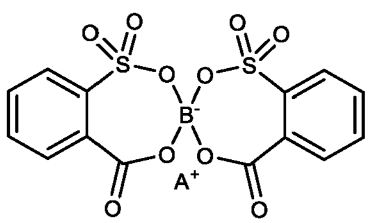
;

Composé B4

Composé B5

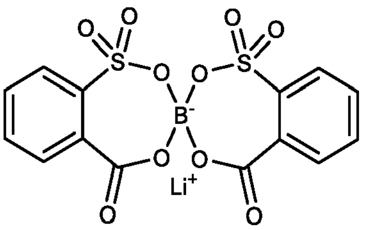 ; 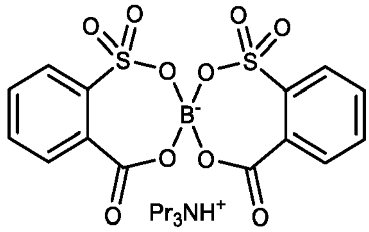 ;

Composé B6 Composé B7

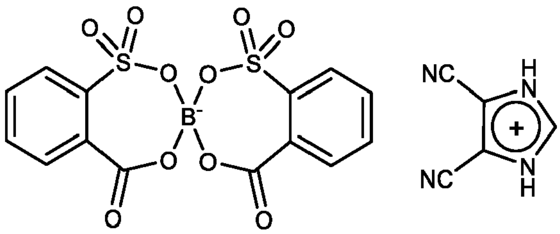 ; 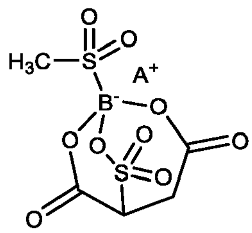 ;

Composé B8 Composé B9

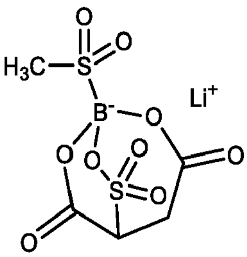 ; 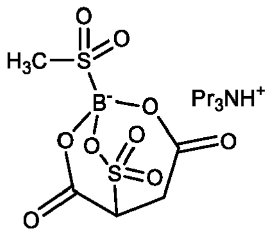 ; 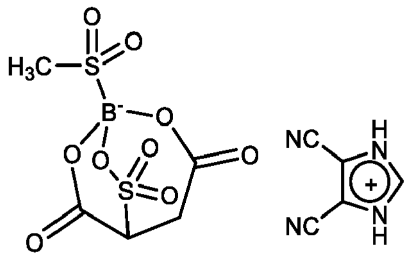 ;

Composé B10 Composé B11 Composé B12

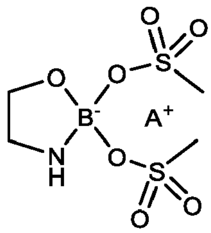 ; 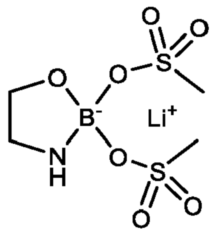 ; 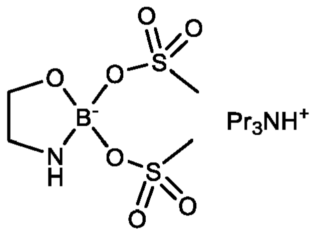 ; 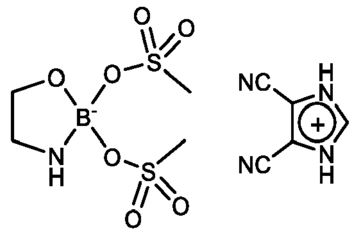 ;

Composé B13 Composé B14 Composé B15 Composé B16

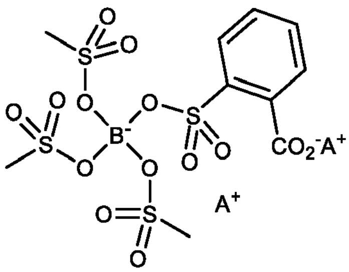 ; 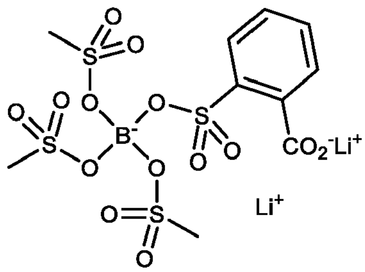 ;

Composé B17 Composé B18

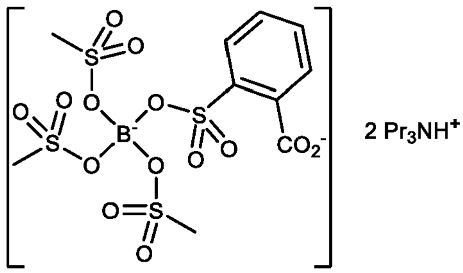 ; 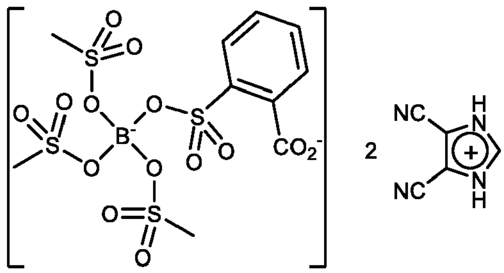 ;

Composé B19 Composé B20

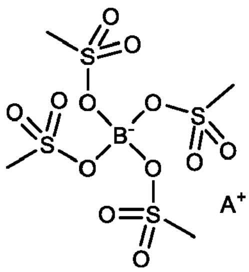 ; 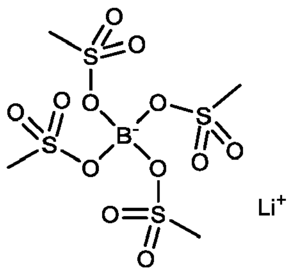 ; 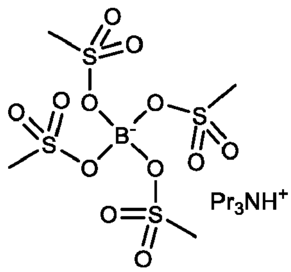 ;

Composé B21 Composé B22 Composé B23

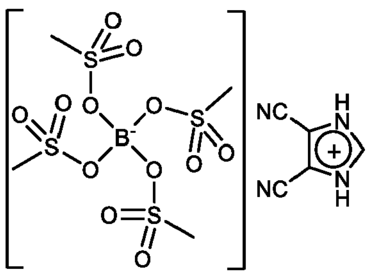 ; 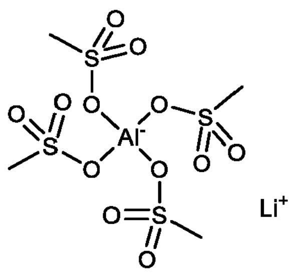

Composé B24 Composé B25

où $A^+$ est tel que défini précédemment.

Selon un exemple additionnel, le composé de Formule III tel qu'ici décrit, est choisi parmi les composés suivants :

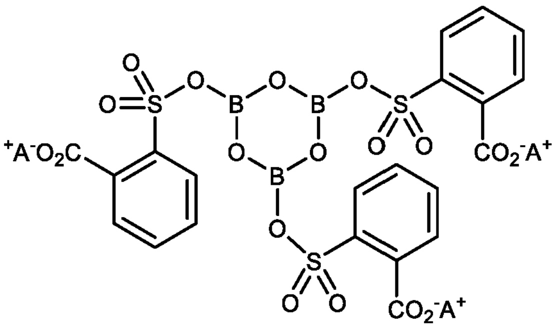
;

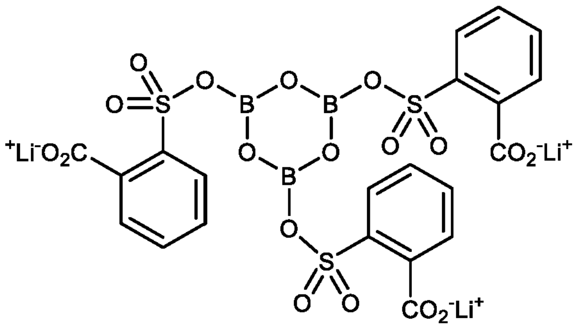
;

Composé C1

Composé C2

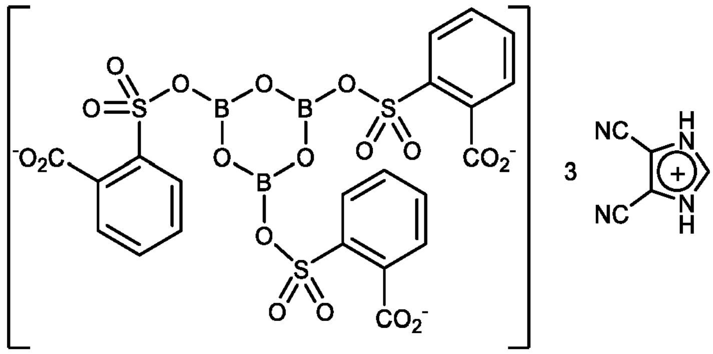
;

Composé C3

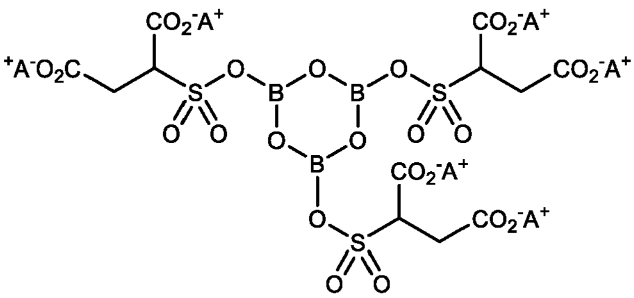
;

Composé C4

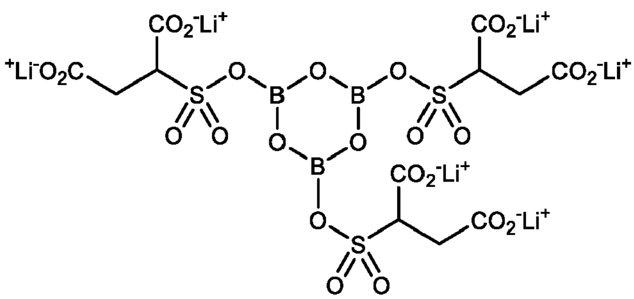
;

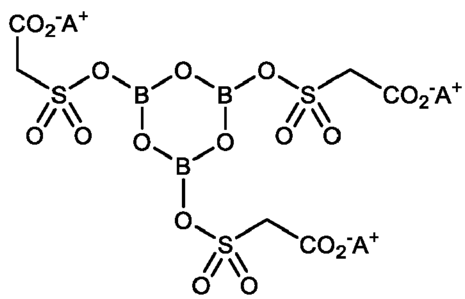
;

Composé C5

Composé C6

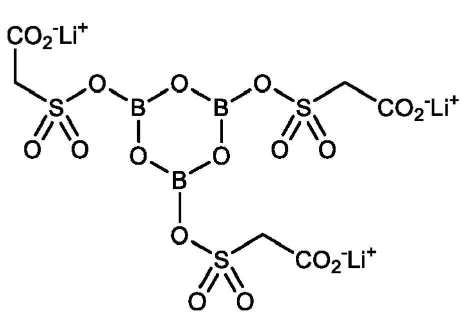 ;

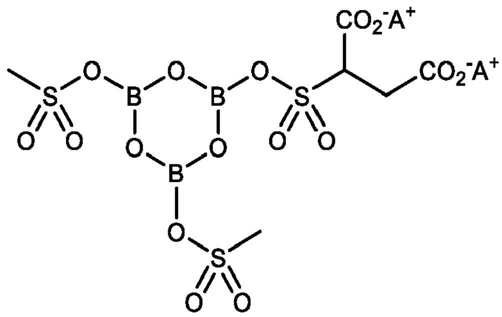 ;

Composé C7

Composé C8

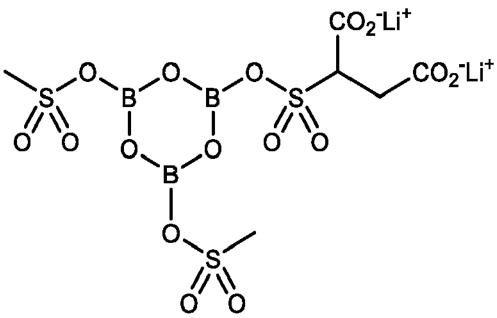 ;

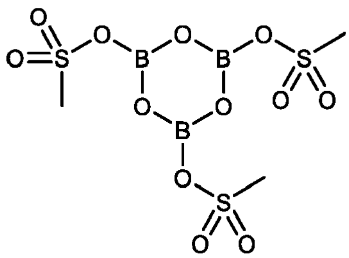 ;

Composé C9

Composé C10

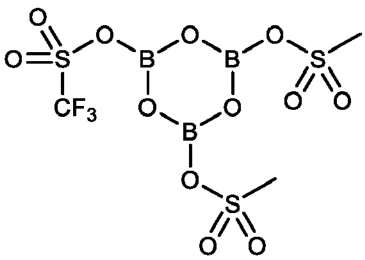 ;

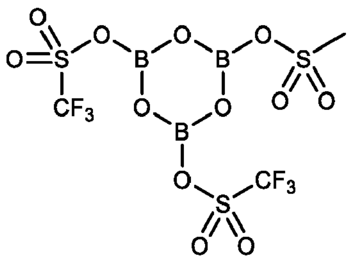 ;

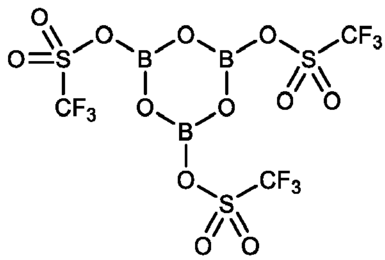 ;

Composé C11

Composé C12

Composé C13

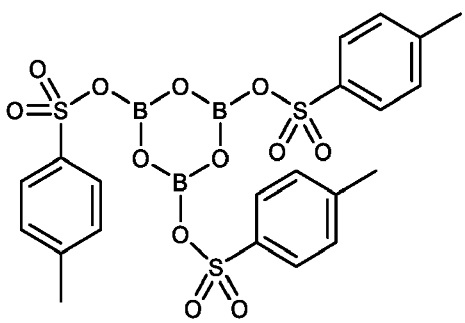 ;

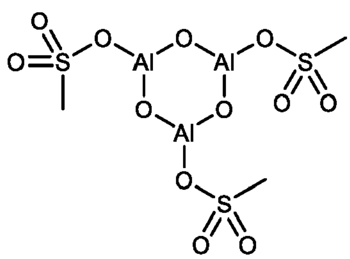 ;

Composé C14

Composé C15

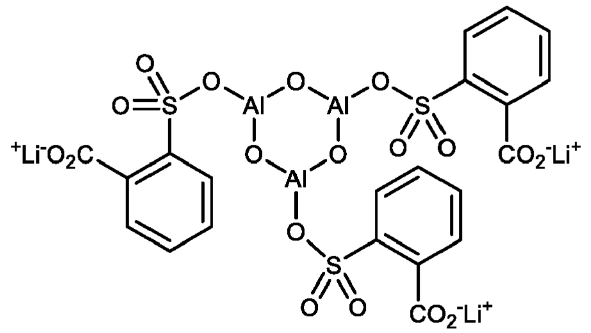

Composé C16

où $A^+$ est tel que défini précédemment.

Selon un autre aspect, la présente demande concerne un procédé de préparation d'un composé tel qu'ici décrit, comprenant une étape de mise en contact d'un composé de Formule IV :

$M(X')_3$ (IV)

dans laquelle M est tel que défini précédemment et X' est choisi parmi hydrogène, OH, halogène (ex : F, Cl, Br), $C_1$-$C_4$alkyle, O-$C_1$-$C_4$alkyle (par exemple, OMe, OEt, Oi-Pr), $C_1$-$C_4$alkylcarboxylate, sulfate, phosphate, ou un sel du composé de Formule IV, par exemple, un composé de Formule (IV) ou un de ses sels est choisi parmi $B(OH)_3$, $BH_3$, $NaBH_4$, $LiBH_4$, $BBr_3$, $BCl_3$, $BF_3$, $BMe_3$, $BEt_3$, $B(i\text{-}Pr)_3$, $B(OMe)_3$, $LiBF_4$, $Al(OH)_3$, $AlBr_3$, $AlCl_3$, $Al(OMe)_3$, $Al(OEt)_3$ $Al(Oi\text{-}Pr)_3$, $Al(OC(O)C_2H_5)_3$, $Al(OC(O)CH(CH_3)_2)_3$, $Al(OC(O)CH_3)_3$, $AlPO_4$, $Al_2(SO_4)_3$, $AlMe_3$, $AlEt_3$, $Al(i\text{-}Pr)_3$, $LiAlH_4$ et $LiAlCl_4$; avec au moins un composé de Formule V :

RXH (V)

où R et X sont tels que définis précédemment et où deux ou trois groupes R peuvent être liés pour ne former qu'un seul composé comprenant deux ou trois groupes XH.

Selon un mode de réalisation, le procédé comprend la mise en contact d'environ un équivalent du composé de formule IV et de la quantité de composé de Formule V correspondant à 2, 3 ou 4 équivalents molaires de groupement XH, la présence d'une base servant à former un sel avec des groupements XH neutralisant la fonction étant exclue du calcul. Des exemples de bases sont décrits plus bas, celles-ci pouvant être minérales ou organiques.

Selon un mode de réalisation, le composé de Formule V (RXH) est un composé choisi parmi les Formules V(a) à V(c) :

$R^3XH$

V(a)

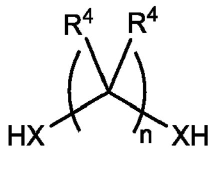

V(b)

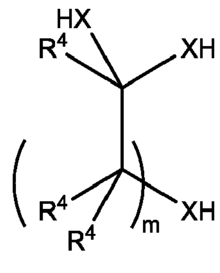

V(c)

dans lesquelles X, n, m, $R^3$, et $R^4$ sont tels que définis précédemment.

Selon un mode de réalisation, au moins un groupement X est un groupe C(O)O ou $S(O)_2O$, ou au moins un groupement X est un groupe $S(O)_2O$.

Selon un exemple, dans le composé de Formule IV, M est un atome de bore. Selon un autre exemple, M est un atome d'aluminium.

Dans le procédé et les composés ci-dessus, $R^3$ peut être un alkyle, cycloalkyle ou aryle substitué par au moins un groupement choisi parmi OH, $NH_2$, $N(R^2)H$, $N(R^2)_2$, $CO_2H$ et $SO_3H$, ou un sel de ceux-ci lorsqu'applicable, où $R^2$ est choisi parmi les groupes alkyle, cycloalkyle ou aryle optionnellement substitués. Par exemple, $R^3$ est un alkyle,

cycloalkyle ou aryle substitué par au moins un groupement choisi parmi $CO_2H$ et $SO_3H$ ou un sel formé d'un anion $CO_2^-$ ou $SO_3^-$ et d'un cation $A^+$, où $A^+$ est tel que défini précédemment. Selon un autre exemple, $R^3$ est choisi parmi les groupes alkyles et phényle substitués ou non substitués, par exemple, les groupes méthyle, trifluorométhyle, carboxyphényle, carboxyalkyle, et dicarboxyalkyle.

Dans le procédé et les composés ci-dessus, $R^4$ peut être un atome d'hydrogène à chaque instance.

Selon un mode de réalisation, le composé de Formule V est un composé de Formule V(b), n est égal à 2 et les groupes $R^4$ combinés avec les atomes de carbone qui y sont rattachés forment un groupe aryle.

Selon un autre mode de réalisation, le composé de Formule V est choisi parmi le pinacol, l'acide orthanilique, l'acide sulfoacétique, l'acide sulfobenzoïque, l'éthanolamine, l'acide méthanesulfonique, l'acide triflique et l'acide sulfosuccinimique.

Selon un mode de réalisation, le procédé tel que décrit ci-dessus comprend :

- la préparation d'un composé de Formule I(a) comprenant la mise en contact du composé de Formule IV avec environ 3 équivalents molaires d'un composé de Formule V(a), optionnellement en présence d'une base; ou
- la préparation d'un composé de Formule I(b1) comprenant la mise en contact du composé de Formule IV avec environ 1 équivalent molaire d'un composé de Formule V(a) et environ 1 équivalent molaire d'un composé de Formule V(b), optionnellement en présence d'une base; ou
- la préparation d'un composé de Formule I(b2) comprenant la mise en contact du composé de Formule IV avec environ 1 équivalent molaire d'un composé de Formule V(b), optionnellement en présence d'une base; ou
- la préparation d'un composé de Formule I(c) comprenant la mise en contact du composé de Formule IV avec environ 1 équivalent molaire d'un composé de Formule V(c), optionnellement en présence d'une base; ou
- la préparation d'un composé de Formule II(a) comprenant la mise en contact du composé de Formule IV avec environ 4 équivalents molaires d'un composé de Formule V(a) en présence d'une base; ou
- la préparation d'un composé de Formule II(b1) comprenant la mise en contact du composé de Formule IV avec environ 1 équivalent molaire d'un composé de Formule V(b) et environ 2 équivalents molaires d'un composé de Formule V(a) en présence d'une base ; ou
- la préparation d'un composé de Formule II(b2) comprenant la mise en contact du composé de Formule IV avec environ 2 équivalents molaires d'un composé de Formule V(b) en présence d'une base; ou
- la préparation d'un composé de Formule II(c) comprenant la mise en contact du composé de Formule IV avec environ 1 équivalent molaire d'un composé de Formule V(c) et environ 1 équivalent molaire d'un composé de Formule V(a) en présence d'une base.

Selon un autre mode de réalisation, la présente demande concerne un procédé de préparation d'un composé de Formule III, comprenant une étape de mise en contact d'un composé de Formule IV :

$$M(X')_3 \qquad (IV)$$

dans laquelle M et X' sont tels que définis précédemment;
avec au moins un composé de Formule VI :

$$R^1XH \qquad (VI)$$

où $R^1$ et X sont tels que définis à la revendication 8.

Par exemple, le procédé comprend la préparation d'un composé de Formule III comprenant la mise en contact du composé de Formule IV avec environ 1 équivalent molaire d'un composé de Formule VI.

Préférentiellement, les procédés tels qu'ici décrits comprennent une étape d'élimination de l'eau. Selon un exemple, le procédé comprend une étape de chauffage à reflux en présence d'un solvant formant un azéotrope avec l'eau. Selon un autre exemple, le procédé comprend l'utilisation d'un agent desséchant.

Selon un autre aspect, la présente demande concerne l'utilisation d'un composé tel qu'ici décrit, ou d'un composé préparé selon un procédé tel qu'ici décrit, dans une composition d'électrolyte. La présente demande concerne aussi une composition d'électrolyte comprenant au moins un composé tel qu'ici décrit, ou un composé préparé selon un

procédé tel qu'ici décrit. Selon un mode de réalisation, la composition d'électrolyte comprend en outre un solvant liquide ou un polymère solvatant. Par exemple, la composition d'électrolyte est un électrolyte liquide, ou un électrolyte polymère gel, ou encore un électrolyte polymère solide.

Selon un dernier aspect, la présente demande concerne une cellule électrochimique comprenant une composition d'électrolyte, telle qu'ici décrite, entre une anode et une cathode. Par exemple, la cellule électrochimique à base d'ion métallique, tel que $Li^+$, $Na^+$, $K^+$, $Rb^+$, $Cs^+$, $Be^{2+}$, $Mg^{2+}$, $Ca^{2+}$ est de type batterie au lithium ou lithium-ion.

## BRÈVE DESCRIPTION DES FIGURES

La Figure 1 illustre la structure chimique (a) du macromonomère acrylate de poly(éthylène glycol)480 (AcrPEG480, x = 8, $M_n$ = 480 g/mol); (b) d'un poly(acrylate de poly(éthylène glycol)480) (PAcrPEG480); (c) d'un copolymère dibloc de PAcrPEG480 et de polystyrène (PAcrPEG480-*b*-PS) utilisés à l'Exemple 2.

La Figure 2 illustre l'effet comparé de solutions 1 M de sels dans un mélange EC/DEC sur la corrosion de l'aluminium, collecteur de courant de la cathode, courbes de haut en bas: LiTFSI, $LiPF_6$, et $LiPF_6$ + additif tel que décrit à l'Exemple 4.1.

La Figure 3 illustre les résultats de cyclage de demi-piles (capacité récupérée en décharge vs. nombre de cycle de charge/décharge) lors de l'utilisation de $LiPF_6$, seul (courbes du bas) ou en combinaison avec les composés C10 ou C13 (courbes supérieures) comme décrits à l'Exemple 4.2.

La Figure 4 illustre les résultats de cyclage de piles (capacité récupérée en décharge vs. nombre de cycle de charge/décharge) lors de l'utilisation de $LiPF_6$, seul (courbes du bas) ou en combinaison avec les composés C10 ou C13 (courbes supérieures) comme décrits à l'Exemple 4.3.

## DESCRIPTION DÉTAILÉE

Tous les termes techniques et scientifiques utilisés ici ont la même signification que celle communément interprétée par la personne versée dans l'art relatif à la présente technologie. La signification de certains termes et expressions utilises est néanmoins fournie ci-dessous.

Le nombre d'atomes de carbone dans un groupe hydrocarboné peut être indiqué par le préfixe "$C_x$-$C_y$," où x est le nombre minimum et y est le nombre maximum d'atomes de carbone dans le groupement.

Les structures chimiques décrites ici, sont dessinées selon les standards conventionnels connus du domaine. Aussi, lorsqu'un atome, comme un atome de carbone, tel que dessiné semble comporter une valence insatisfaisante, alors la valence est assumée comme satisfaite par un ou des atomes d'hydrogène même si ceux-ci ne sont pas nécessairement dessinés de façon explicite.

De façon générale, le terme "substitué", qu'il soit précédé ou non du terme "optionnellement", signifie qu'un ou plusieurs atome(s) d'hydrogène sur le groupement désigné est remplacé par un substituant adéquat. Les substituants ou combinaisons de substituants envisagés dans la présente description sont ceux résultant en la formation d'un composé chimiquement stable. Des exemples de substituants incluent les groupes halogène (ex: F, Cl, Br), hydroxyle, alkoxyle, nitrile, azido, carboxylate, alkoxycarbonyl, amine primaire, secondaire ou tertiaire, amide, nitro, silane, siloxane, thiocarboxylate, alkyle, alcényle, aryle, ou cycloalkyle. Lorsqu'applicable, ces substituants peuvent aussi être substitués par l'une des groupements ci-dessus.

La présente demande concerne de nouveaux composés à base d'un élément de la famille du bore, leur préparation, et leur utilisation comme additif et/ou sel dans des cellules électrochimiques, par exemple, dans la composition d'électrolytes liquide, gel ou solide. Selon un exemple, les cellules électrochimiques sont des batteries de type Li-ion ou d'autres types de batteries ioniques (par exemple, $Na^+$, $K^+$, $Rb^+$, $Cs^+$, $Be^{2+}$, $Mg^{2+}$, $Ca^{2+}$, etc.). De façon générale, les groupements présents sur l'atome de bore ou d'aluminium peuvent être variés afin de moduler l'électronégativité de cet atome et par conséquent sa dissociation avec un cation métallique ou organique.

Ces composés peuvent, par exemple, participer à la formation d'une couche de passivation stable sur le collecteur de courant (ex : fait d'aluminium), d'une interface électrolyte solide (SEI) stable sur la cathode ou l'anode, et/ou améliorer la durée de vie de la batterie à température ambiante, par exemple, en améliorant la rétention de capacité à haute température et/ou à haut voltage.

Les composés décrits ici peuvent être utilisés comme additifs, comme sels organiques ou métalliques (lors que les composés comprennent un cation organique ou métallique), seuls ou en combinaison avec d'autres sels, par exemple dans un solvant liquide ou un polymère solvatant (gel ou solide).

Selon un mode de réalisation, la présente description concerne des composés de Formules I ou II, ou l'un de leurs sels :

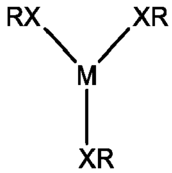

Formule I

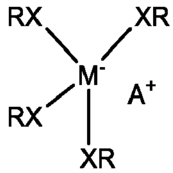

Formule II

dans lesquelles :

M est un atome choisi parmi dans les éléments de la colonne 13 (Groupe IIIA) du tableau périodique des éléments, par exemple, un atome de bore, d'aluminium, de gallium, d'indium ou de thallium, par exemple un atome de bore, d'aluminium, de gallium ou d'indium, ou encore un atome de bore ou d'aluminium ;

X est indépendamment choisi parmi O, S, NH, NR, ou un groupe C(O)O ou $S(O)_2O$, où ledit groupe est attaché à M par un atome d'oxygène ;

R est indépendamment choisi parmi les groupes substitués ou non substitués alkyle linéaire ou ramifié, cycloalkyle et aryle, ou 2 ou 3 groupes R combiné avec les radicaux X qui y sont rattachés forme un cycle ayant de 5 à 7 chainons comprenant M, ou un groupe bicyclique ayant de 7 à 10 chainons comprenant M, et/ou au plus un XR est un groupe hydroxyle ; et

$A^+$ est un cation métallique ou un cation d'une base organique, et où le ratio molaire total de $A^+$ par rapport au reste de la molécule est ajusté afin d'atteindre l'électroneutralité.

Selon un mode de réalisation, au moins un groupement X est un groupe C(O)O ou $S(O)_2O$, ou au moins un groupement X est un groupe $S(O)_2O$.

Des exemples non limitatifs de $A^+$ comme cation métallique incluent les cations des éléments Li, Na, K, Rb, Cs, Be, Mg, Ca, Sr, Ba, Al, Zn, Cu, Sc, Y, Fe, Co, Ni, Ti, Sn, V, Cr, or Mn, ou les cations des métaux alcalins ou alcalino-terreux, par exemple, $Li^+$, $Na^+$, $K^+$, $Rb^+$, $Cs^+$, $Be^{2+}$, $Mg^{2+}$, $Ca^{2+}$, $Sr^{2+}$, et $Ba^{2+}$, par exemple, $A^+$ est $Li^+$.

Des exemples de $A^+$ comme cation d'une base organique comprennent les cations ammonium, alkylammonium, dialkylammonium, trialkylammonium, tétraalkylammonium, triarylammonium, tricycloalkylammonium, tétracycloalkylammonium, imidazolium, 1,3-dialkylimidazolium, 4,5-dicyanoimidazolium, N-alkylpyrrolidinium, N-alkylpiperidinium, oxoniums, trialkyloxonium, sulfoniums, trialkylsulfonium, triarylsulfonium, tricycloalkylsulfonium, phosphoniums, tétraalkylphosphonium, tétraarylphosphonium, tétracycloalkylphosphonium, trialkylphosphonium, triarylphosphonium, tricycloalkylphosphonium, trialkylsélénium, tétraalkylarsonium et d'autres bases similaires. Par exemple, $A^+$ peut être le cation d'une base organique choisie parmi la triméthylamine, triéthylamine, tripropylamine, tributylamine, N-alkylpyrrolidine, N-alkylmorpholine, *N*-méthylimidazole, 4,5-dicyanoimidazole, pyridine, picoline, lutidine, quinoline, *N,N*-diméthylaniline, diisopropyléthylamine, quinuclidine, triméthylphosphine, et d'autres bases organiques similaires.

Par exemple, les composés sont de Formules I(a), I(b1), I(b2) et I(c), ou l'un des Composés A1 à A12, et/ou leurs sels. Selon un autre exemple, les composés sont de Formules II(a), II(b1), II(b2) et II(c), ou l'un des Composés B1 à B25, et/ou leurs sels.

Selon un autre mode de réalisation, la présente description concerne des composés de Formule III, ou l'un de ses sels :

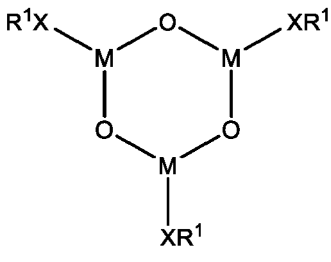

Formule III

dans laquelle M et X sont tels que définis précédemment; et
$R^1$ est indépendamment choisi parmi les groupes substitués ou non substitués alkyle linéaire ou ramifié, cycloalkyle et aryle.

Selon un mode de réalisation, au moins un groupement X est un groupe C(O)O ou $S(O)_2O$, ou au moins un groupement X est un groupe $S(O)_2O$.

Selon un mode de réalisation, dans les composés de Formules I, II ou III, les groupes R ou $R^1$ sont indépendamment des groupes alkyle, cycloalkyle ou aryle substitués par au moins un groupement choisi parmi OH, $NH_2$, $N(R^2)H$, $N(R^2)_2$, C(O)OH et $SO_3H$, ou un sel de ceux-ci lorsqu'applicable, par exemple, un sel formé d'un ion $C(O)O^-$ et $SO_3^-$ et d'un cation $A^+$, où $A^+$ est tel que défini précédemment et $R^2$ est choisi parmi les groupes alkyle, cycloalkyle ou aryle optionnellement substitués.

Par exemple, les composés correspondent à l'un des Composés C1 à C16, et/ou leurs sels.

**Procédé Général**

La préparation des composés ci-dessus se fait de façon similaire, le produit final étant déterminé largement par le nombre d'équivalent de chaque réactif et les conditions utilisées. Le bore et l'aluminium (ou d'autres atomes de la colonne 13), étant de très bons électrophiles, par exemple lorsque trisubstitués, peuvent réagir avec des nucléophiles (incluant les acides carboxylique et sulfonique). Par exemple, un dérivé électrophile de bore ou d'aluminium tel que l'acide borique ou l'hydroxyde d'aluminium ou un équivalent halogéné ou alkoxylé, est mis en contact avec un composé comprenant un ou des groupement(s) nucléophile(s), par exemple, un hydroxyle, un thiol, une amine, un acide sulfonique, et/ou un acide carboxylique. De préférence, le composé nucléophile comprend au moins un groupe acide sulfonique ou acide carboxylique, ou au moins un groupement acide sulfonique.

De manière générale, lors de la préparation des composés de Formules I et II (et leurs sousgroupes tels que définis ci-dessous) ou de Formule III, la réaction entre le dérivé électrophile de bore ou d'aluminium et le composé nucléophile est réalisée en présence d'un solvant, généralement un solvant organique non réactif ou, exceptionnellement, un solvant aqueux. Des exemples non-limitatifs de solvants organiques incluent les éther aliphatiques ou cycliques (tels que l'éther diéthylique, l'éther de *t*-butyl et de méthyl (MTBE), le tétrahydrofurane (THF), le dioxane, le diglyme, etc.), les solvants halogénés (tels que le dichlorométhane (DCM ou $CH_2Cl_2$), le dichloroéthane (DCE), etc.), et les solvants aromatiques (tels que toluène, benzène, etc.), ou leurs combinaisons. Selon un exemple, le solvant est le THF, le $CH_2Cl_2$ ou un mélange de ceux-ci. Selon un autre exemple, le solvant est le toluène.

La présence d'une base peut être requise dans le milieu afin de neutraliser une fonction acide, par exemple, un substituant sur un groupe R, ou afin de neutraliser l'élément $M^-$ lorsque tétrasubstitué. Par exemple, lorsque $A^+$ est un cation métallique, la base peut être choisi parmi des bases lithiées ou sodées, par exemple, choisies parmi l'hydroxyde de lithium, l'hydroxyde de sodium, le méthylate de lithium, le méthylate de sodium, l'éthylate de lithium, l'éthylate de sodium, l'isopropylate de lithium, l'isopropylate de sodium, le tertiobutylate de lithium, le tertiobutylate de sodium, l'hydrure de lithium, l'hydrure de sodium, le n-butyllithium, le n-butylsodium, le s-butyllithium, le diisopropylamidure de lithium, le tert-butyllithium, le méthyllithium, le phényllithium, le phénylsodium, le benzyllithium, le benzylsodium, le dimsylate de lithium, le dimsylate de sodium, le carbonate de lithium, le carbonate de sodium, l'acétate de lithium, et l'acétate de sodium. De façon similaire, lorsque $A^+$ est un cation d'une base organique, la base est choisie parmi les bases organiques décrites ici en référence à la définition de $A^+$.

Selon un mode de réalisation, la méthode peut comprendre l'élimination de l'eau durant la réaction, par exemple, par l'ajout d'un agent desséchant, tel que le sulfate de magnésium anhydre ou un tamis moléculaire, ou par l'utilisation d'un appareil de type Dean-Stark et le chauffage à reflux dans un solvant non-miscible et formant un azéotrope avec l'eau (ex : toluène). Ceci permet de retirer les traces d'eau présente ou générée dans le milieu réactionnel.

Le milieu réactionnel peut être maintenu à température ambiante ou être chauffé pour accélérer la réaction ou pour l'élimination d'eau (Dean-Stark, voir ci-dessus). La température peut être comprise entre une température d'environ -78°C et la température de reflux du solvant ou du mélange de solvants utilisé. La durée de la réaction varie, par exemple, selon la réactivité des produits de départ impliqués et la température utilisée. La durée peut aussi dépendre du nombre d'équivalents utilisés et de la réactivité respective des fonctions alcool/amine/acide présente sur le composé nucléophile introduit dans le milieu réactionnel. Le groupement acide sulfonique est généralement le plus réactif et réagira plus rapidement. Le milieu est préférentiellement gardé sous atmosphère inerte (sous atmosphère d'azote ou d'argon par exemple).

**Procédé Formule I**

Selon un aspect, un procédé de préparation d'un composé de Formule I telle que définie ci-dessus est envisagée, le procédé comprenant une étape de mise en contact d'un composé de Formule IV :

$M(X')_3$ (IV)

dans laquelle M est tel que défini précédemment et X' est choisi parmi hydrogène, OH, halogène (ex : F, Cl, Br), $C_1$-$C_4$alkyle, O-$C_1$-$C_4$alkyle (par exemple, OMe, OEt, Oi-Pr), $C_1$-$C_4$alkylcarboxylate, sulfate, phosphate, ou un sel du composé de Formule IV (par exemple, un composé de Formule (IV) ou un de ses sels ;
avec au moins un composé de Formule V :

RXH (V)

où R et X sont tels que définis précédemment et où deux ou trois groupes R peuvent être liés pour ne former qu'un seul composé comprenant deux ou trois groupes XH. Le procédé comprend la mise en contact d'environ un équivalent du composé de formule IV et de la quantité de composé de Formule V correspondant à 2 ou 3 équivalents molaires de groupement XH. Notant que la présence d'une base servant à former un sel avec des groupements XH neutralise la fonction qui n'est alors pas considérée dans le calcul.

Dans le présent procédé et ceux qui sont décrits dans la présente demande, lors que le composé de formule V comprend plusieurs fonctions XH (nucléophile) incluant un groupe sulfonate, alors le groupe sulfonate réagit généralement plus rapidement que les autres groupes nucléophiles comme les groupes hydroxyles, amine, ou carboxylate.

Des exemples de composés de Formule IV, ou de l'un de ses sels, comprennent, $B(OH)_3$, $BH_3$, $NaBH_4$, $LiBH_4$, $BBr_3$, $BCl_3$, $BF_3$, $BMe_3$, $BEt_3$, $B(i\text{-}Pr)_3$, $B(OMe)_3$, $LiBF_4$, $Al(OH)_3$, $AlBr_3$, $AlCl_3$, $Al(OMe)_3$, $Al(OEt)_3$ $Al(Oi\text{-}Pr)_3$, $Al(OC(O)C_2H_5)_3$, $Al(OC(O)CH(CH_3)_2)_3$, $Al(OC(O)CH_3)_3$, $AlPO_4$, $Al_2(SO_4)_3$, $AlMe_3$, $AlEt_3$, $Al(i\text{-}Pr)_3$, $LiAlH_4$ et $LiAlCl_4$.

Selon un mode de réalisation, le composé de Formule V (RXH) est un composé choisi parmi les Formules V(a) à V(c) :

$R^3XH$

V(a)

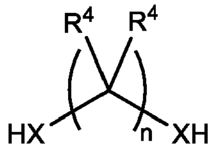

V(b)

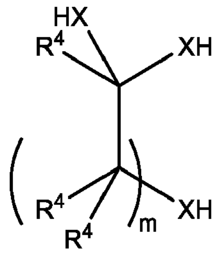

V(c)

dans lesquelles,

- X est tel que décrit précédemment ;
- n est un nombre entier choisi parmi 1, 2, 3 et 4;
- m est un nombre entier choisi parmi 0, 1, et 2 ;
- $R^3$ est un groupement substitué ou non substitué choisi parmi les alkyles linéaires ou ramifiés, les cycloalkyles et les aryles ; et
- $R^4$ est, indépendamment à chaque instance, choisi parmi hydrogène, halogène, et les groupements substitués ou non substitués alkyle linéaire ou ramifié, cycloalkyle et aryle, ou les groupes $R^4$ combinés avec les atomes de carbone qui y sont rattachés forment un groupe cycloalkyle mono ou bicyclique ou un aryle, et où n est différent de 1 lorsque X est O ou NH à chaque instance.

Selon un mode de réalisation, au moins un groupement X est un groupe C(O)O ou $S(O)_2O$, ou au moins un groupement X est un groupe $S(O)_2O$.

Selon un mode de réalisation, $R^3$ est un alkyle, cycloalkyle ou aryle substitué par au moins un groupement choisi parmi SH, OH, $NH_2$, $N(R^2)H$, $N(R^2)_2$, $CO_2H$ et $SO_3H$, ou un sel de ceux-ci lorsqu'applicable, par exemple, un sel formé d'un anion $CO_2^-$ ou $SO_3^-$ et d'un cation $A^+$, où $A^+$ et $R^2$ sont tels que définis précédemment.

Selon un autre mode de réalisation, $R^3$ est choisi parmi les groupes alkyle et phényle substitués ou non substitués, par exemple, les groupes méthyle, trifluorométhyle, carboxyphényle, carboxyalkyle, et dicarboxyalkyle.

Selon un autre exemple, $R^4$ est un atome d'hydrogène à chaque instance. Dans un autre exemple, dans la formule V(b), n est égal à 2 et les groupes $R^4$ combinés avec les atomes de carbone qui y sont rattachés forment un groupe aryle.

Selon un mode de réalisation du présent procédé, les composés V(a) à V(c) sont choisis parmi le pinacol,

l'acide orthanilique, l'acide sulfoacétique, l'acide sulfobenzoïque, l'éthanolamine, l'acide méthanesulfonique, l'acide triflique et l'acide sulfosuccinimique.

Selon un mode de réalisation, le procédé comprend la préparation d'un composé de Formule I choisi parmi les Formules I(a), I(b1), I(b2) et I(c) :

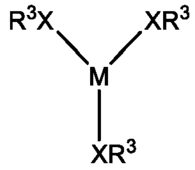

I(a)

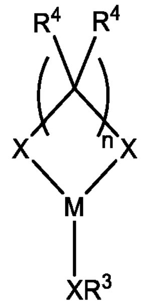

I(b1)

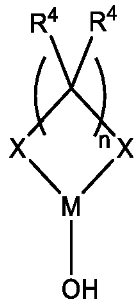

I(b2)

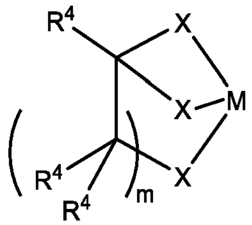

I(c)

dans lesquelles X, M, $R^3$, $R^4$, n et m sont tels que définis précédemment. À la Formule I(a), $XR^3$ est le même ou différent à chaque occurrence.

Selon un mode de réalisation, au moins un groupement X est un groupe C(O)O ou $S(O)_2O$, ou au moins un groupement X est un groupe $S(O)_2O$.

Par exemple, la préparation d'un composé de Formule I(a) comprend la mise en contact d'un composé de Formule IV avec environ trois équivalents d'au moins un composé de Formule V(a). Selon un autre exemple, la préparation d'un composé de Formule I(a), dans laquelle le groupe $R^3$ comprend un groupe C(O)OH ou $SO_2OH$, peut comprendre la mise en contact d'un composé de Formule IV avec environ trois équivalent d'un composé de Formule V(a) (donc 6 équivalents molaires de groupe anionique) et de trois équivalents molaires de contre ions sous la forme d'une base (ex. 1,5 équivalent de $Li_2CO_3$).

De façon similaire, le composé de Formule I(b2) est préparé par la mise en contact d'un composé de Formule IV avec environ un équivalent d'un composé de Formule V(b). La préparation d'un composé de Formule I(b1) comprend, outre la mise en contact d'un composé de Formule IV avec environ un équivalent d'un composé de Formule V(b), aussi la mise en contact avec un équivalent d'un composé de Formule V(a).

De manière analogue, le composé de Formule I(c) est préparé par la mise en contact d'un composé de Formule IV avec environ un équivalent d'un composé de Formule V(c).

Selon un mode de réalisation, le composé de Formule I est choisi parmi les composés suivants :

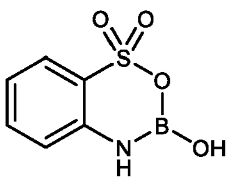 ;

Composé A1

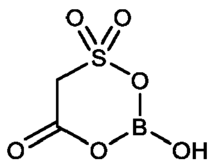 ;

Composé A2

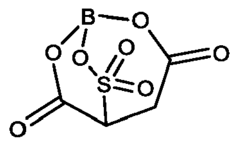 ;

Composé A3

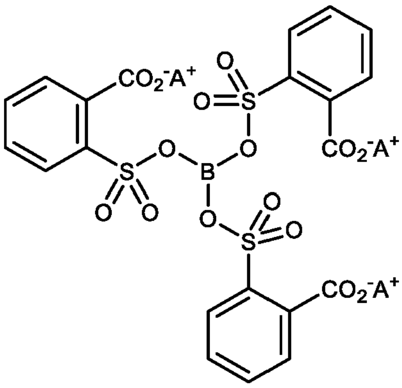
;

Composé A4

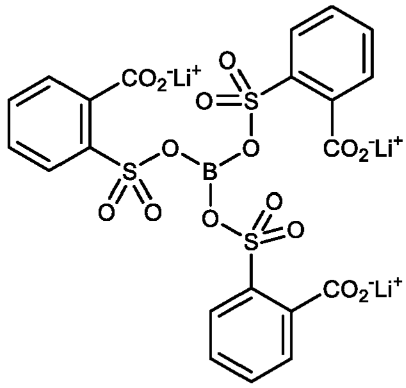
;

Composé A5

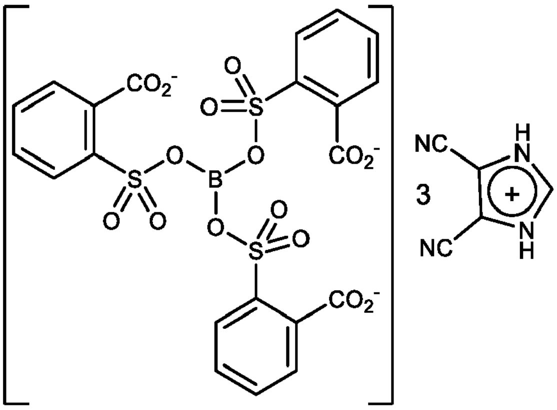
;

Composé A6

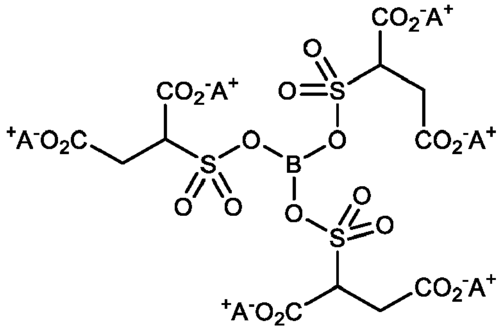
;

Composé A7

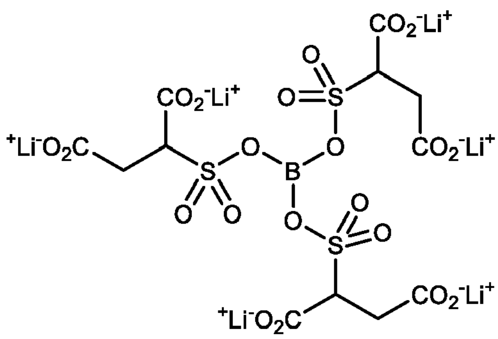
;

Composé A8

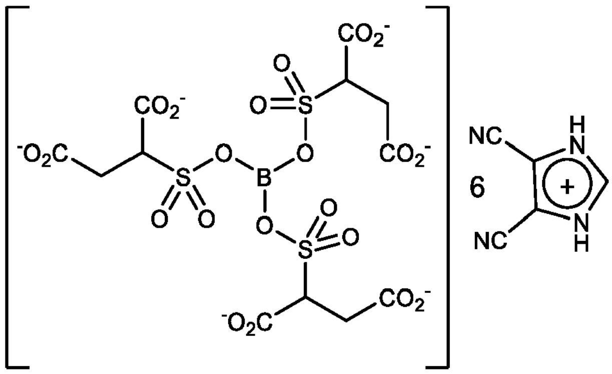
;

Composé A9

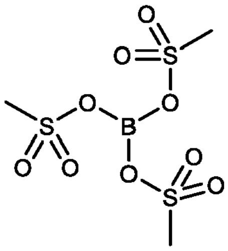;
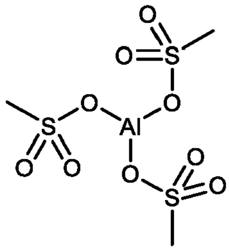;
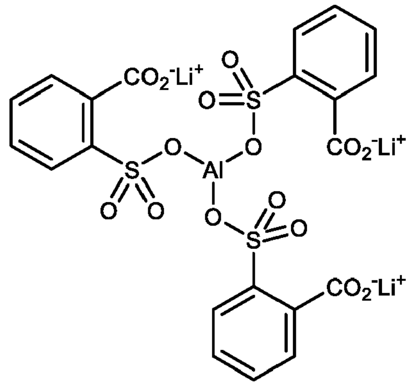

Composé A10 Composé A11 Composé A12

où $A^+$ est tel que défini précédemment.

**Procédé Formule II**

Selon un autre aspect, la présente description se rapporte à un procédé pour la préparation d'un composé de Formule II telle que définie ci-dessus, comprenant une étape de mise en contact en présence d'une base d'un composé de Formule IV :

$M(X')_3$ (IV)

dans laquelle M et X' sont tels que définis précédemment;
avec au moins un composé de Formule V :

RXH (V)

où R et X sont tels que définis précédemment et où deux ou trois groupes R peuvent être liés pour ne former qu'un seul composé comprenant deux ou trois groupes XH. Le procédé comprend la mise en contact d'environ un équivalent du composé de formule IV, de la quantité de composé de Formule V correspondant à au moins 4 équivalents molaires du groupement XH, et d'une base comprenant au moins un équivalent molaire du cation $A^+$.

Selon un mode de réalisation, le composé de Formule V (RXH) est un composé choisi parmi les Formules V(a) à V(c) telles que définies ci-dessus.

Selon un mode de réalisation, le procédé comprend la préparation d'un composé de Formula II choisi parmi les Formules II(a), II(b1), II(b2) et II(c) :

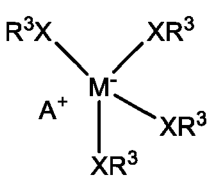
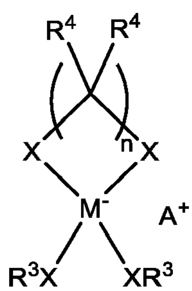
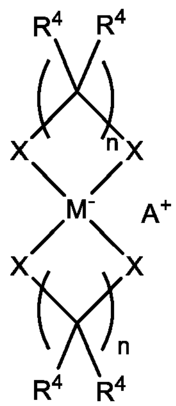
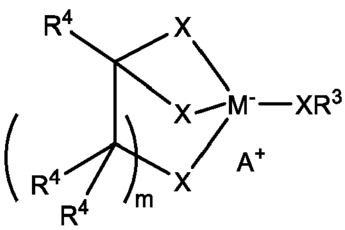

II(a) II(b1) II(b2) II(c)

dans lesquelles X, M, $R^3$, $R^4$, n et m sont tels que définis précédemment.

Selon un mode de réalisation, au moins un groupement X est un groupe C(O)O ou $S(O)_2O$, ou au moins un

groupement X est un groupe $S(O)_2O$.

Par exemple, la préparation d'un composé de Formule II(a) comprend la mise en contact d'un composé de Formule IV avec quatre équivalents d'un composé de Formule V(a) en présence d'un équivalent de cation $A^+$ sous forme de base. Selon un autre exemple, la préparation d'un composé de Formule II(a), dans laquelle le groupe $R^3$ comprend un groupe $CO_2H$ ou $SO_3H$, peut comprendre la mise en contact d'un composé de Formule IV avec environ quatre équivalents d'au moins un composé de Formule V(a) (donc 8 équivalents molaires de groupe anionique) et de quatre équivalents molaires additionnels de cations sous forme de base (ex. 2 équivalent de $Li_2CO_3$ pour 4 de $Li^+$). De façon similaire, si l'un des groupe $R^3$ de la Formule II(a) comprend plus d'un groupe $CO_2H$ ou $SO_3H$, la préparation comprend l'ajout d'un nombre d'équivalents correspondant de cations sous forme de base.

De façon similaire, le composé de Formule II(b2) est préparé par la mise en contact d'un composé de Formule IV avec environ deux équivalents d'un composé de Formule V(b) en présence d'un équivalent de cation $A^+$ sous forme de base. La préparation d'un composé de Formule II(b1) comprend, outre la mise en contact d'un composé de Formule IV avec environ un équivalent d'un composé de Formule V(b), aussi la mise en contact avec deux équivalents d'un composé de Formule V(a) en présence d'un équivalent de cation $A^+$ sous forme de base.

De manière analogue, le composé de Formule II(c) est préparé par la mise en contact d'un composé de Formule IV avec environ un équivalent d'un composé de Formule V(c) et d'un équivalent d'un composé de formule V(a) en présence d'un équivalent de cation $A^+$ sous forme de base.

Selon un mode de réalisation, les composés V(a) à V(c) sont choisis parmi le pinacol, l'acide orthanilique, l'acide sulfoacétique, l'acide sulfobenzoïque, l'éthanolamine, l'acide méthanesulfonique, l'acide triflique et l'acide sulfosuccinimique.

Selon un mode de réalisation, le composé de Formule II est choisi parmi les composés suivants :

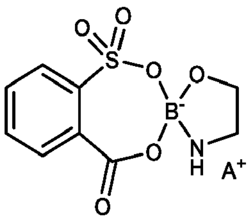 ;

Composé B1

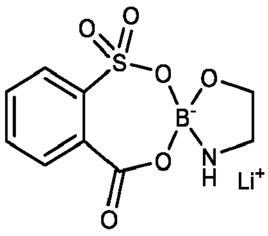 ;

Composé B2

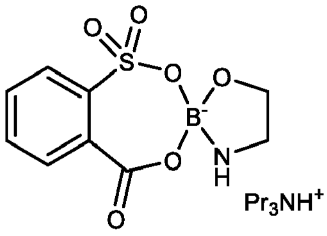 ;

Composé B3

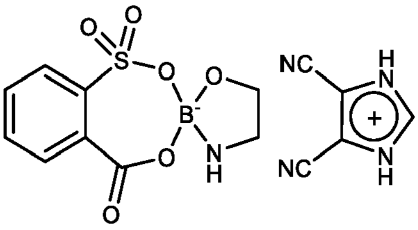 ;

Composé B4

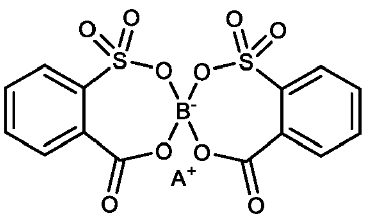 ;

Composé B5

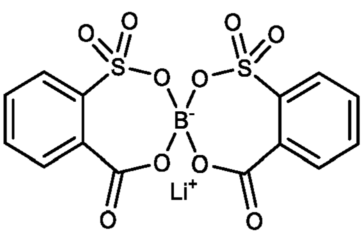 ;

Composé B6

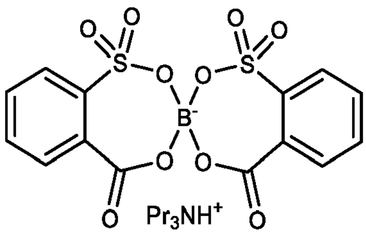 ;

Composé B7

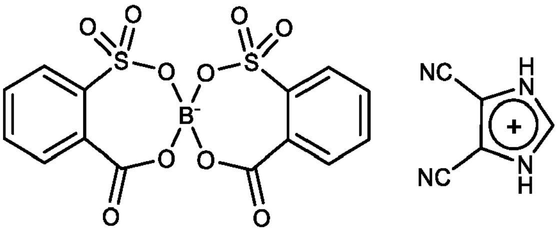 ; 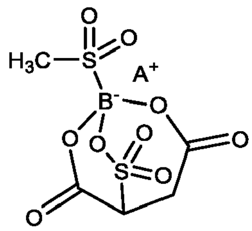 ;

Composé B8 Composé B9

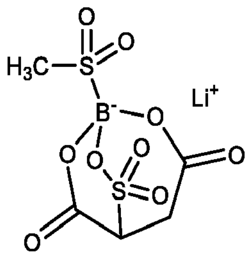 ; 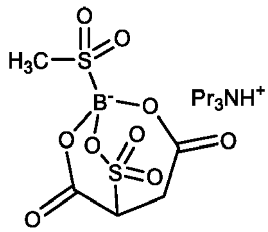 ; 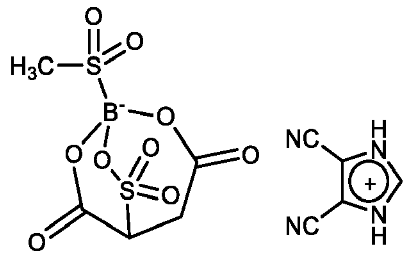 ;

Composé B10 Composé B11 Composé B12

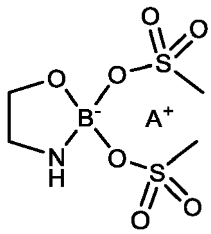 ; 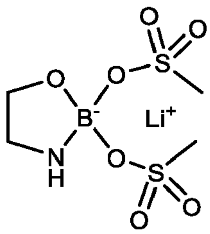 ; 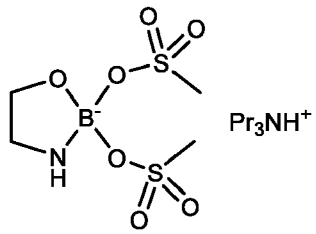 ; 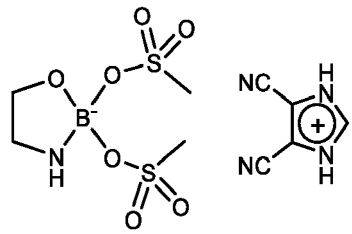 ;

Composé B13 Composé B14 Composé B15 Composé B16

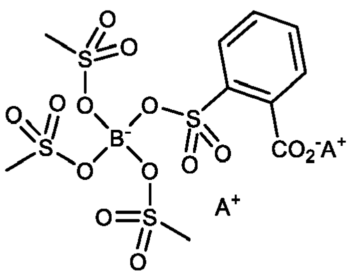 ; 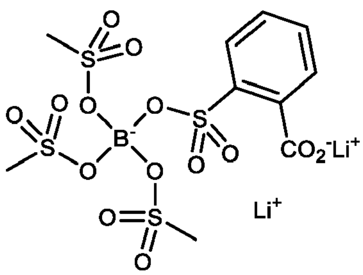 ;

Composé B17 Composé B18

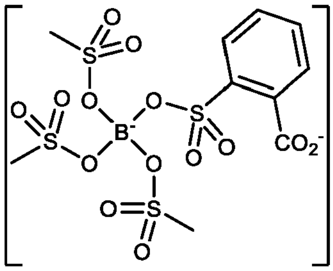 2 $Pr_3NH^+$ ; 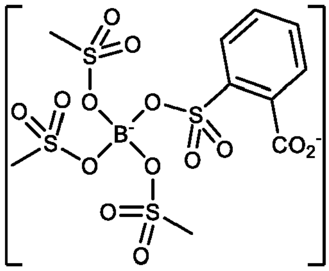 2 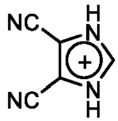 ;

Composé B19 Composé B20

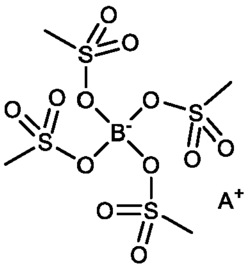 $A^+$ ; 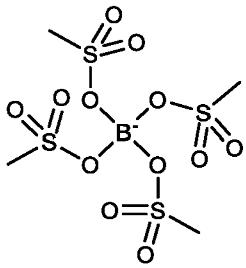 $Li^+$ ; 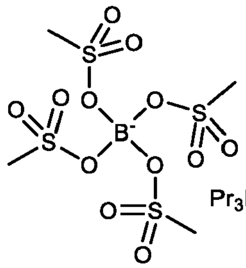 $Pr_3NH^+$ ;

Composé B21 Composé B22 Composé B23

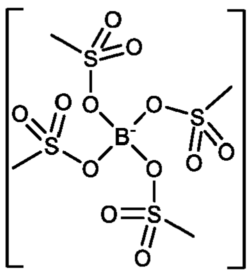 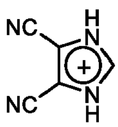 ; 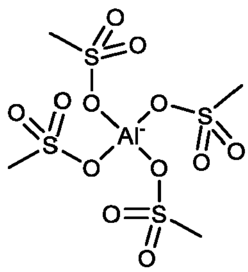 $Li^+$

Composé B24 Composé B25

où $A^+$ est tel que défini précédemment.

**Procédé Formule III**

Selon un autre aspect, la présente description se rapporte à un procédé pour la préparation d'un composé de Formule III telle que définie ci-dessus, comprenant une étape de mise en contact d'un composé de Formule IV :

$M(X')_3$ (IV)

dans laquelle M et X' sont tels que définis précédemment;
avec au moins un composé de Formule VI :

$R^1XH$ (VI)

où $R^1$ et X sont tels que définis précédemment.

Selon un mode de réalisation, au moins un groupement X est un groupe C(O)O ou $S(O)_2O$, ou au moins un groupement X est un groupe $S(O)_2O$.

Le procédé comprend la mise en contact d'environ un équivalent du composé de Formule IV et de la quantité de composé de Formule VI correspondant à au moins 1 équivalent molaire (c'est-à-dire que le ratio $R^1X$ : M est d'environ

1). Le procédé comprend une étape de chauffage et/ou d'élimination d'eau. Par exemple, le procédé comprend le chauffage des composés dans un solvant formant un azéotrope avec l'eau (par exemple le toluène), le chauffage se faisant à reflux et avec un appareil de type Dean-Stark.

Pour la préparation des composés de Formule III, avec ou sans contre-ion, les différents réactifs sont mis en contact en présence d'un solvant. Préférentiellement le solvant est le toluène.

Selon un mode de réalisation, le milieu réactionnel est d'abord agité à température ambiante puis porté à reflux et la réaction est effectuée dans un montage de type Dean Stark afin d'éliminer l'eau du milieu. La durée de réaction dépend principalement de la réactivité respective des produits de départ introduits dans le milieu et de la température de réaction. La durée de la réaction peut être d'environ 1 h à environ 10 h au total, par exemple, l'étape de chauffage à reflux peut durer entre 2 h et 8 h.

Selon un exemple, la préparation d'un composé de Formule III comprend la mise en contact d'un composé de Formule IV avec un équivalent d'un composé de Formule VI. Selon un autre exemple, la préparation d'un composé de Formule III, dans laquelle le groupe $R^1$ comprend un ou plusieurs groupe(s) $CO_2H$ ou $SO_3H$ additionnel(s) (en surplus du groupement XH), peut comprendre la mise en contact d'un composé de Formule IV avec environ 1 équivalent d'au moins un composé de Formule VI et d'un équivalent molaire de cation $A^+$ sous forme de base (ex. 2 moles de $Li^+$ par molécule de $Li_2CO_3$) pour équivalent molaire de groupement $CO_2H$ ou $SO_3H$ présent.

Selon un mode de réalisation, le composé de Formule III est choisi parmi les composés suivants :

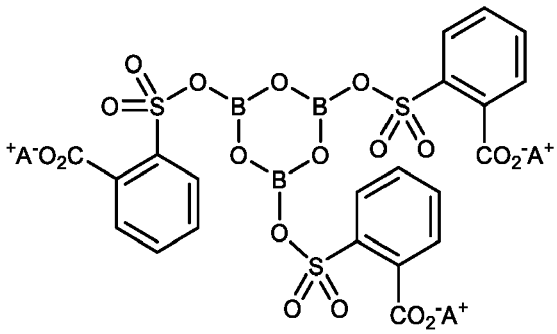
;

Composé C1

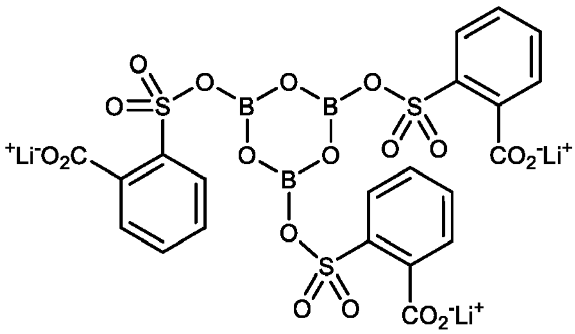
;

Composé C2

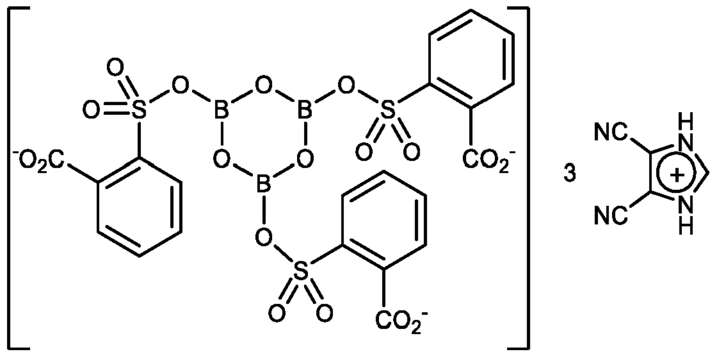
;

Composé C3

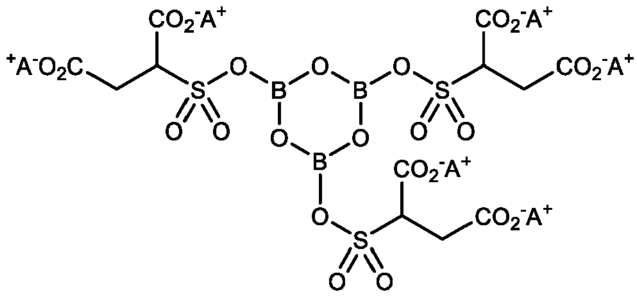

;

Composé C4

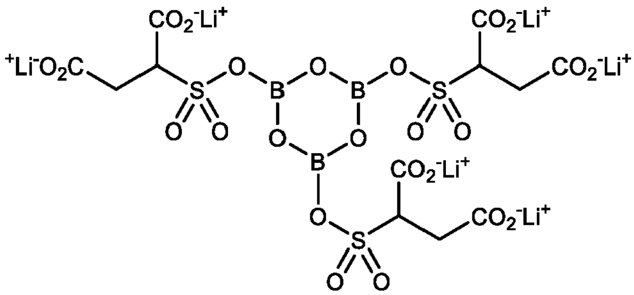

;

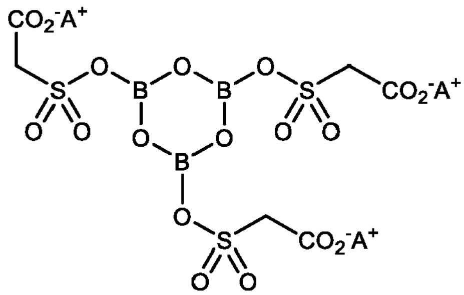

;

Composé C5

Composé C6

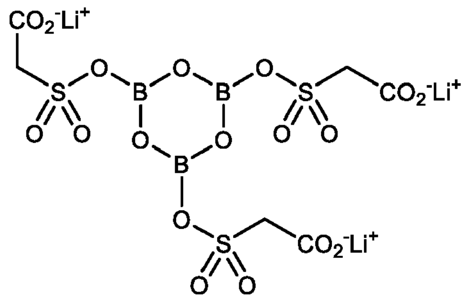

;

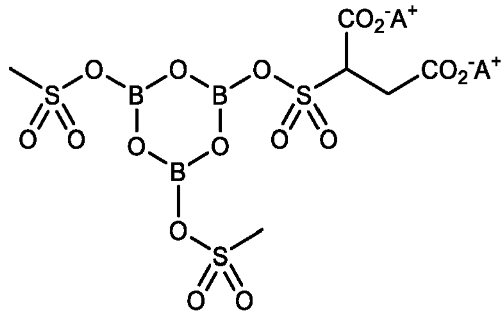

;

Composé C7

Composé C8

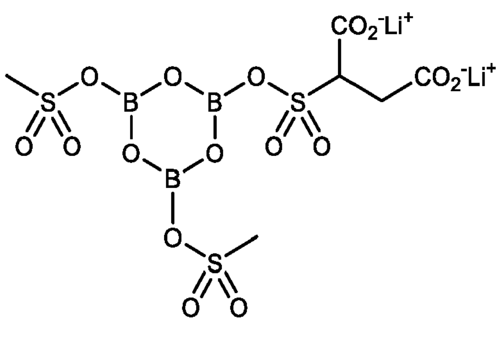

;

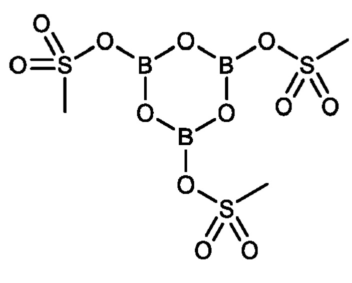

;

Composé C9

Composé C10

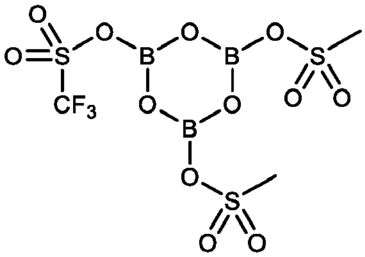 ; 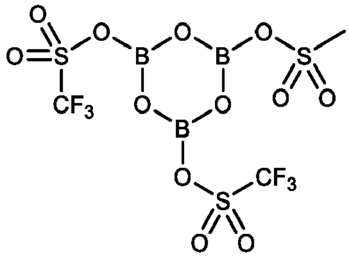 ; 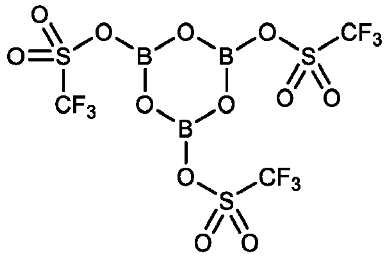 ;

Composé C11 Composé C12 Composé C13

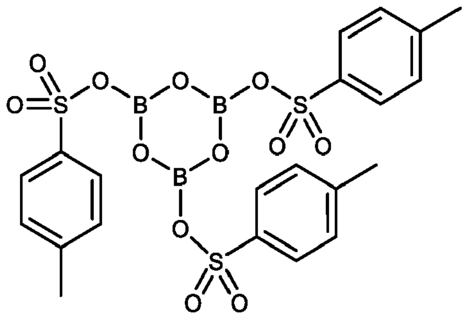 ; 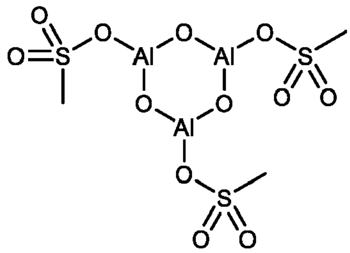 ;

Composé C14 Composé C15

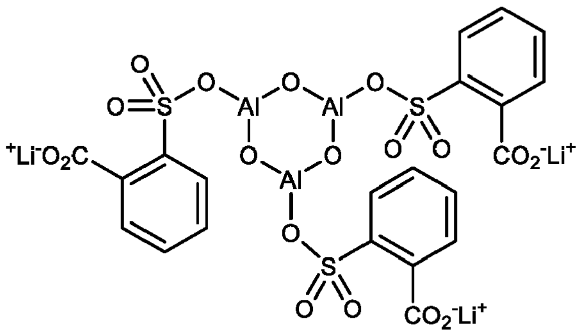

Composé C16

où $A^+$ est tel que défini précédemment.

**Utilisation**

Selon un autre aspect, la présente demande envisage aussi l'utilisation des composés décrits, en tant qu'additifs ou sels dans les compositions d'électrolytes liquides, gels, ou solides. Lorsque les composés préparés comprennent des groupements ioniques sous forme de sel métallique ou organique, ceux-ci peuvent servir de sel ou d'additifs dans les électrolytes permettant ainsi le transport des ions de la cathode vers l'anode (et vice versa). Par exemples, les composés formés peuvent être ajoutés dans les batteries lithium-ion pour améliorer la résistance thermique, la résistance au haut voltage, la résistance à la corrosion de l'aluminium (collecteur de courant usuel pour les cathodes), améliorant ainsi que la durée de vie de la batterie. Ils peuvent aussi améliorer les performances des batteries à haut régime de charge ou de décharge (puissance).

Les composés synthétisés ont des applications en tant qu'additifs mais également en tant que sels métalliques lorsque ces composés contiennent un cation métallique. Ces structures font intervenir des fonctions acides sulfoniques et contiennent des cations métalliques, dont la présence est avantageuse dans les compositions d'électrolyte.

L'utilisation des composés de Formules I, II ou III en tant qu'additif d'électrolyte permet d'améliorer la durée de vie de la batterie. Par exemple, l'ajout d'additif permet également d'augmenter la stabilité électrochimique jusqu'à 5 V vs $Li^+/Li$. Les composés de Formules I, II ou III comprenant un(des) cation(s) métallique(s) préparés par la présente

méthode peuvent être utilisés seul en tant que sel métallique ou mélangé à un ou plusieurs sels métalliques (dissout dans un solvant liquide ou un solvant polymère), permettant de combiner les propriétés bénéfiques de chacun.

Les composés de Formule III peuvent être utilisés en tant qu'additifs dans les compositions d'électrolytes, mais également en tant que sels métalliques si ces composés contiennent un cation métallique.

Certains composés décrits dans la présente demande, par exemple, des composés se présentant sous forme de sels comprenant un cation organique, peuvent être utilisés comme liquides ioniques, seuls ou lorsqu'en combinaison avec d'autres sels.

## EXEMPLES

Les exemples qui suivent sont à titre illustratifs et ne devraient en aucun cas être interprétés afin de limiter la portée de l'invention telle que décrite dans la présente demande.

### Exemple 1 - Synthèse de composés

*1.1 Composé A*

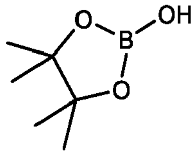

Dans un ballon de 100 mL, sont introduits 1 équivalent molaire (ci-après éq.) de pinacol (80,87 mmol), 1éq. d'acide borique (80,87 mmol) et 2 pointes de spatules de $MgSO_4$ sous atmosphère d'azote. Du THF (50 mL) est ensuite ajouté, puis le milieu est laissé sous agitation à température ambiante (20°C) pendant 2 h 30. Le mélange est filtré afin de retirer le $MgSO_4$ puis le solvant est évaporé. La poudre blanche obtenue est séchée à la pompe pendant une nuit. Le rendement obtenu de Composé A est de 96 % (11,17 g).

RMN $^{1}H$ (400 MHz, $CDCl_3$) $\delta$ ppm 1,21 (s, 12 H), 5,40 - 5,66 (m, 1 H) ; RMN $^{11}B$ (128 MHz, $CDCl_3$) $\delta$ ppm 22,4 ; RMN $^{13}C$ (101 MHz, $CDCl_3$) $\delta$ ppm 24,5, 83,2.

*1.2 Composé A 1*

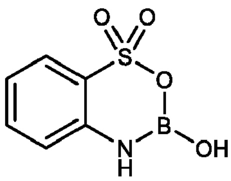

Dans un bicol de 100 mL sont introduits 1 éq. d'acide orthanilique (3,29 mmol) puis 10 mL d'eau sont ajoutés sous atmosphère d'azote. Le mélange est chauffé à environ 50 °C pendant 15 min pour permettre la dissolution de l'acide orthanilique. Parallèlement, une solution aqueuse d'acide borique (1 éq., 3,29 mmol) est préparée dans 10 mL d'eau. La solution est ensuite lentement introduite (au goutte à goutte) à la seringue dans le bicol. La solution est ensuite maintenue à température ambiante (20 °C) pendant 66 h. Le rendement obtenu est de 100 % (0,655 g).

RMN $^{1}H$ (400 MHz, $D_2O$) $\delta$ ppm 7,32 - 7,37 (m, 1 H), 7,38 - 7,46 (m, 1 H), 7,52 - 7,59 (m, 1 H), 7,83 (m, 1 H) ; RMN $^{11}B$ (128 MHz, $D_2O$) $\delta$ ppm 19,40.

*1.3 Composé A2*

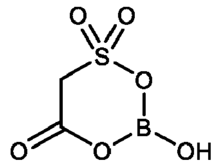

Dans un ballon de 100 mL, sont introduits 1éq. d'acide sulfoacétique (1,53 mmol) puis 20 mL de THF distillé, et du $MgSO_4$. Après 5 min, 1éq. d'acide borique (1,53 mmol) est introduit dans le ballon. Le mélange est maintenu pendant 18 h à température ambiante (20 °C), sous atmosphère d'azote. Le milieu est ensuite filtré et le solvant évaporé, toujours en restant sous atmosphère d'azote. Après séchage à la pompe pendant une nuit, un solide blanc est obtenu avec un rendement de 85 % (0.215 g).

RMN $^1H$ (400 MHz, THF-d8) $\delta$ ppm 3,89 (s, 2 H) ; RMN $^{11}B$ (128 MHz, THF-d8) $\delta$ ppm 20,25 ; RMN $^{13}C$ (101 MHz, THF-d8) $\delta$ ppm 55,6, 165,3.

<u>*1.4 Composé A3*</u>

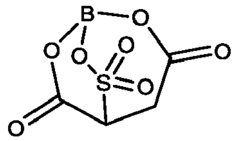

Dans un ballon de 100 mL, sont introduits 1éq. d'acide sulfosuccinimique (2,68 mmol), 20 mL de THF et 2 pointes de spatule de $MgSO_4$. Après 20 min, 1 éq. d'acide borique (2,68 mmol) est alors ajouté. La réaction est maintenue à température ambiante (20 °C) pendant une nuit (18 h). Le milieu est ensuite filtré pour éliminer le $MgSO_4$ et le solvant est évaporé. Une huile de couleur marron est obtenue avec un rendement de 91 % (0,50 g).

RMN $^1H$ (400 MHz, DMSO-*d6*) $\delta$ ppm 2,75 - 2,89 (m, 1 H), 2,92 - 3,04 (m, 1 H), 4,01 - 4,12 (m, 1 H) ; RMN $^{11}B$ (128 MHz, DMSO-*d6*) $\delta$ ppm 20,07 ; RMN $^{13}C$ (101 MHz, DMSO-*d6*) $\delta$ ppm 32,4, 62,0, 170,9.

<u>*1.5 Composé A5*</u>

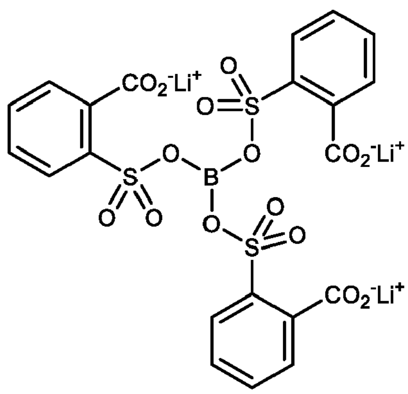

De l'acide borique (1 éq., 3,30 mmol) et du THF (15 mL) sont introduits dans un ballon de 100 mL afin d'obtenir une solubilisation partielle de l'acide borique. De l'acide sulfobenzoïque (3 éq., 9,89 mmol) est ensuite ajouté dans le milieu et une solution homogène est obtenue après 20 min. Par la suite, 1.5 éq. de $Li_2CO_3$ (4,95 mmol) sont ajoutés et le milieu est agité pendant 30 min, jusqu'à sa solubilisation. Le milieu est alors maintenu pendant 4 h à la température ambiante (20°C), résultant en une solution homogène. Le solvant est alors évaporé et une poudre blanche (de type « nuageux »), est obtenue avec un rendement de 98 % (2,05 g).

RMN $^1H$ (400 MHz, DMSO) $\delta$ ppm 7,26 - 7,34 (m, 6 H), 7,59 - 7,67 (m, 3 H), 7,85 - 7,91 (m, 3 H); RMN $^{13}C$ (101 MHz, $CDCl_3$) $\delta$ ppm 131,8, 134,8, 135,8, 149,1, 173,8.

*1.6 Composé A6*

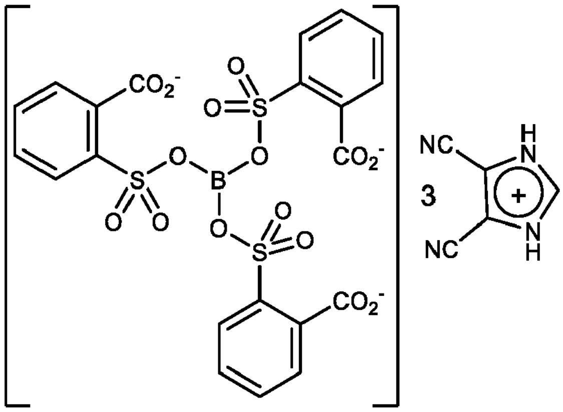

Dans un ballon de 100 mL, est introduit l'acide borique (1 éq., 8,09 mmol) auquel est ajouté 70 mL de THF. Après 30 min à température ambiante, est ajouté l'acide sulfobenzoïque (3 éq., 24,26 mmol). La réaction est ensuite maintenue à température ambiante pendant 3 h. Une solution de *1H*-imidazole-4,5-dicarbonitrile (3 éq., 24,26 mmol) dans 10 mL de THF est ajoutée. Le mélange réactionnel restant sous forme de solution homogène est agité pour une période de 2h. Le THF est ensuite évaporé et un solide blanc est obtenu avec un rendement de 99 % (7,790 g).

RMN $^{1}H$ (400 MHz, DMSO-*d6*) $\delta$ ppm 7,46 - 7,58 (m, 6 H), 7,74 (s, 3 H), 7,81 - 7,88 (m, 3 H), 8,30 - 8,32 (m, 3 H) ; RMN $^{13}C$ (101 MHz, DMSO-*d6*) $\delta$ ppm 111,6, 115,6, 127,1, 130,2, 131,2, 131,3, 131,5, 142,3, 144,6, 168,2.

*1.7 Composé A8*

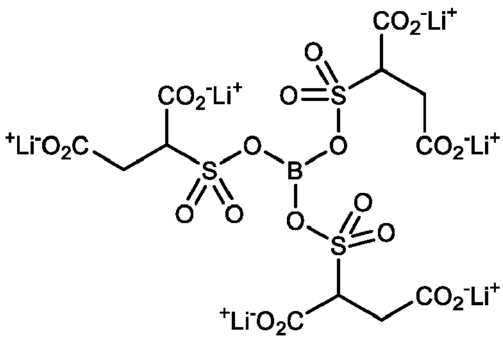

De l'acide sulfosuccinimique (3éq., 10,6 mmol) et du $MgSO_4$ sont introduits dans ballon de 100 mL, puis 15 mL de THF sont ajoutés. Après 10 min, le $MgSO_4$ est éliminé par filtration et rincé avec 25 mL de THF. Le filtrat est récupéré dans un ballon de 100 mL. De l'acide borique (1 éq., 3,53 mmol) est ajouté au milieu. Après 30 min, un mélange homogène est obtenu. $Li_2CO_3$ (3 éq., 10,6 mmol) est ensuite ajouté et, après 15 min d'agitation, un précipité est formé. Après une période de 30 min un produit intermédiaire (entre poudre et huile blanche) est observé. La réaction est maintenue durant 20 h à température ambiante (20°C). Le milieu est ensuite filtré et le solide récupéré est séché à la pompe pendant 2 h. Une poudre blanche est obtenue avec un rendement de 93 % (2,140 g). Le composé obtenu est insoluble dans le DMSO-$D_6$ et l'acétonitrile mais soluble dans l'eau.

RMN $^{1}H$ (400 MHz, $D_2O$) $\delta$ ppm 2,77 - 2,97 (m, 6 H), 3,91 - 3,99 (m, 3 H) ; RMN $^{11}B$ (128 MHz, $D_2O$) $\delta$ 19,4 ppm ; RMN $^{13}C$ (101 MHz, $D_2O$) $\delta$ ppm 34,9, 64,2, 172,5, 176,4.

*1.8 Composé A 11*

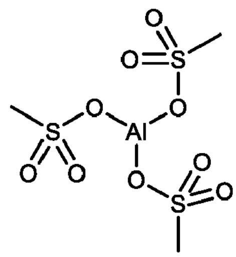

Dans un ballon de 100 mL, sont introduits l'hydroxyde d'aluminium (1 éq., 12,82 mmol) et 70 mL de toluène pour former un mélange hétérogène. L'acide méthanesulfonique (3 éq., 38,46 mmol) est ensuite ajouté. La réaction est maintenue pendant 5 h à reflux avec un appareil de type Dean-Stark pour l'élimination de l'eau formée. Après évaporation du solvant et séchage pendant une nuit sous vide, une poudre blanche est obtenue avec un rendement de 97 % (3,87 g).
RMN $^1H$ (400 MHz, DMSO-*d6*) δ ppm 2,43 (m, 9 H).

*1.9 Composé A12*

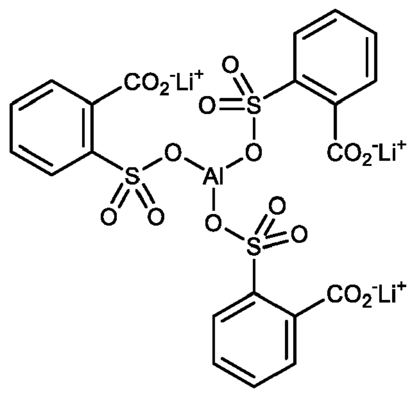

Dans un ballon de 100 mL, sont introduits l'hydroxyde d'aluminium (1 éq., 12,82 mmol) et 70 mL de toluène pour former un mélange hétérogène. L'acide sulfobenzoïque (3 éq., 38,46 mmol) et le carbonate de lithium (1,5 éq., 19,23 mmol) sont ensuite ajoutés. La réaction est maintenue pendant 5 h à reflux avec un appareil de type Dean-Stark pour l'élimination de l'eau formée. Après évaporation du solvant et séchage pendant une nuit sous vide, une poudre blanche est obtenue avec un rendement de 97 % (7,80 g).
RMN $^1H$ (400 MHz, DMSO-*d6*) δ ppm 7,33 - 7,42 (m, 6 H), 7,51 - 7,60 (m, 3 H), 7,74 - 7,83 (m, 3 H).

*1.10 Composé B2*

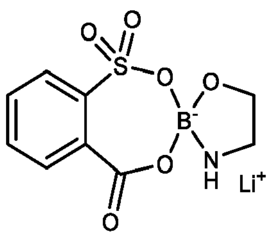

De l'acide sulfobenzoïque (1 éq., 9,89 mmol), de l'acide borique (1 éq., 9,89 mmol), et 20 mL de THF sont introduits dans un ballon de 100 mL sous atmosphère d'azote. Le milieu est agité environ 15 min pour solubilisation des solides. Une solution d'éthanolamine (1 éq., 9,89 mmol) dans du $CH_2Cl_2$ est ensuite ajoutée et un précipité blanc est formé. Du $Li_2CO_3$ (0,5 éq., 4,95 mmol) est ensuite ajouté au milieu et la réaction est maintenue à température ambiante

(20°C) pendant 5 h. Un solide huileux blanc est alors filtré et trituré avec du $CH_2Cl_2$ (2 × 15 mL). Après séchage à la pompe pendant une nuit (18h), un solide blanc est obtenu avec un rendement quantitatif (2,740 g).

RMN $^1H$ (400 MHz, DMSO-$d_6$) δ ppm 2,85 (m, 2 H), 3.59 (m, 2 H), 7,34 (m, 2 H), 7,40 (m, 1 H), 7,76 (m, 1 H) ; RMN $^{11}B$ (128 MHz, DMSO-$d_6$) δ ppm 1,46, 1,34; RMN $^{13}C$ (101 MHz, DMSO-$d_6$) δ ppm 41,8, 58,2, 127,0, 127,5, 128,9, 129,5, 142,8, 172,8.

*1.11 Composé B6*

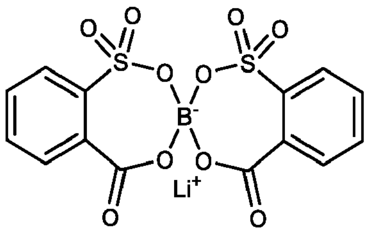

De l'acide sulfobenzoïque (2 éq., 4,94 mmol) préalablement séché sur $MgSO_4$ et 20 mL de THF sont introduits dans un ballon. Puis 1 éq. d'acide borique (2,97 mmol) est ajouté, suivi de 10 mL de $CH_2Cl_2$. Du $Li_2CO_3$ (0,5 éq., 1,48 mmol) est ensuite ajouté au milieu réactionnel, lequel est maintenu alors à température ambiante (20°C) pendant une nuit (18h). Le produit obtenu est très sensible à l'humidité de l'air. Après filtration du milieu et évaporation du solvant, le composé est obtenu avec un rendement de 97 % (1,2 g).

RMN $^1H$ (400 MHz, DMSO-*d6*) δ ppm 7,47 - 7,58 (m, 4 H), 7,73 - 7,78 (m, 2 H), 7,81 - 7,87 (m, 2 H) ; RMN $^{13}C$ (101 MHz, DMSO-*d6*) δ ppm 126,6, 129,7, 130,6, 130,9, 131,2, 144,3, 167,6.

*1.12 Composé B8*

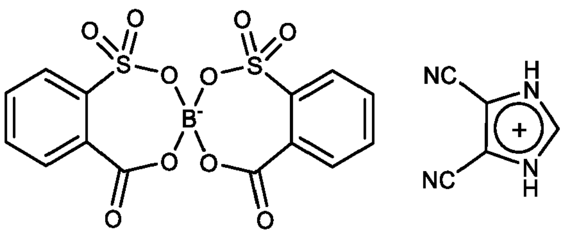

Dans un ballon de 100 mL, est introduit l'acide borique (1 éq., 8,09 mmol) auquel est ajouté 70 mL de THF. Après 30 min à température ambiante, est ajouté l'acide sulfobenzoïque (2 éq., 16,17 mmol). La réaction est maintenue à température ambiante pendant 3 h. Une solution de 1H-imidazole-4,5-dicarbonitrile (1 éq., 8,09 mmol) dans 10 mL de THF est ajoutée et le mélange est agité pendant 2h. Le THF est ensuite évaporé. Un solide blanc est alors obtenu avec un rendement quantitatif (4,20 g).

RMN $^1H$ (400 MHz, DMSO-*d6*) δ ppm 7,47 - 7,59 (m, 4 H), 7,75 (dd, J=7,58, 1,47 Hz, 2 H), 7.84 (dd, J=7,70, 1,34 Hz, 2 H), 8,31 (s, 1 H).

*1.13 Composé B10*

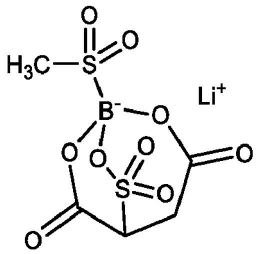

De l'acide sulfosuccinimique (1 éq., 3,85 mmol), 20 mL de THF et du $MgSO_4$ sont introduits dans un ballon, sous atmosphère d'azote. Après 15 min, on introduit de l'acide borique (1 éq., 3,85 mmol). Le milieu est maintenu à température ambiante (20°C) pendant une nuit (18h). Le milieu est alors filtré pour éliminer le $MgSO_4$ puis le solvant est évaporé. Le composé intermédiaire étant insoluble, 10 mL de $CH_2Cl_2$ sont ajoutés au milieu. Une solution d'acide méthanesulfonique (1 éq., 3,85 mmol) dans 5 mL de $CH_2Cl_2$ et 5 mL de THF est préparée et ajoutée au milieu suivi de $Li_2CO_3$ (0,5 éq.). Après 4 h de réaction, le précipité est filtré puis séché à la pompe pendant une nuit. Une poudre blanche est obtenue avec un rendement de 98 % (1,1 g).

RMN $^1H$ (400 MHz, DMSO-$d_6$) $\delta$ ppm 2,33 (s, 3 H), 2,61 - 2,72 (m, 1 H), 2,74 - 2,87 (m, 1 H), 3,59 (m, 1 H) ; RMN $^{13}C$ (101 MHz, DMSO-$d_6$) $\delta$ ppm 33,4, 60,9, 167,0, 172,2.

*1.14 Composé B11*

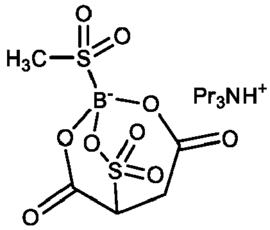

Dans un ballon de 250 mL, sont introduits l'acide borique (1 éq.) et 70 mL de THF, puis on ajoute l'acide sulfosuccinimique (1 éq.) et du $MgSO_4$. La réaction est maintenue à température ambiante pendant 2 h. Le $MgSO_4$ est ensuite filtré. L'acide méthanesulfonique (1 éq.) est ajouté et la réaction se poursuit à température ambiante pendant 2 h. On ajoute ensuite la tripropylamine (1 éq.). Après 6 h de réaction au total, le solvant est évaporé. On obtient alors un solide avec un rendement de 97 % (3,70 g).

RMN $^1H$ (400 MHz, DMSO-$d_6$) $\delta$ ppm 0,91 (t, $J$=7,40 Hz, 9 H), 1,57 - 1,69 (m, 6 H), 2,42 (s, 3 H), 2,60 - 2,73 (m, 1 H), 2,61 - 2,87 (m, 1 H), 2,94 - 3,08 (m, 6 H), 3,59 (m, 1 H) ; RMN $^{13}C$ (101 MHz, DMSO-*d6*) $\delta$ ppm 11,3, 17,1, 25,6, 34,4, 40,1, 54,0, 62,1, 67,5, 170,0, 173,2

*1.15 Composé B14*

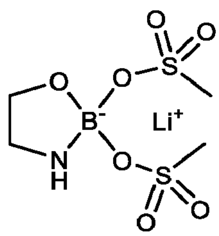

De l'éthanolamine (1 éq., 2,66 mmol), 20 mL de THF et de l'acide borique (1 éq., 2,66 mmol) sont introduits successivement dans un ballon de 100 mL. Le mélange est maintenu à température ambiante (20°C) pendant 2 h, puis le solvant est évaporé. Du $CH_2Cl_2$ (10 mL) est alors ajouté au milieu. Une solution d'acide méthanesulfonique (2 éq., ,33

mmol) dans $CH_2Cl_2$ (5 mL) et THF (5 mL) est ajoutée au mélange, suivie de $Li_2CO_3$ (0,5 éq., 1,33 mmol). Après une nuit (18 h), le précipité est filtré puis séché à la pompe pendant une nuit. Une poudre blanche est obtenue avec un rendement quantitatif (1,42 g).

RMN $^1$H (400 MHz, DMSO-$d_6$) δ ppm 2,36 (s, 6 H), 2,80 - 2,91 (m, 2 H), 3,53 - 3,66 (m, 2 H) ; RMN $^{11}$B (128 MHz, DMSO-$d_6$) δ ppm 5,34.

*1.16 Composé B18*

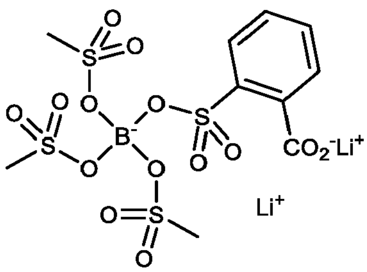

De l'acide sulfobenzoïque (1 éq., 4,95 mmol), 20 mL de THF et du $MgSO_4$ sont introduits dans un ballon, sous atmosphère d'azote. Après 15 min, on introduit de l'acide borique (1 éq., 4,95 mmol). Le milieu est maintenu à température ambiante (20°C) pendant une nuit (22h). Le milieu est alors filtré pour éliminer le $MgSO_4$ puis le solvant est évaporé. Le composé intermédiaire étant insoluble, 10 mL de $CH_2Cl_2$ sont ajoutés au milieu. Une solution d'acide méthanesulfonique (3 éq.,14,85 mmol) dans 5 mL de $CH_2Cl_2$ et 5 mL de THF est préparée et ajoutée au milieu, suivie de $Li_2CO_3$ (0.5 éq.). Le milieu est maintenu pendant 22 h à température ambiante (20°C). Après filtration et séchage à la pompe, une poudre blanche est obtenue avec un rendement de 88 %.

RMN $^1$H (400 MHz, DMSO-$d_6$) δ ppm 2,32 - 2,37 (m, 9 H), 7,47 - 7,59 (m, 2 H), 7,73 - 7,78 (m, 1 H), 7,82 - 7,86 (m, 1 H) ; RMN $^{11}$B (128 MHz, DMSO-$d_6$) δ ppm 19,55 ; RMN $^{13}$C (101 MHz, DMSO-$d_6$) δ ppm 40,1, 127,0, 130,2, 131,1, 131,3, 131,6, 144,7, 168,2.

*1.17 Composé B23*

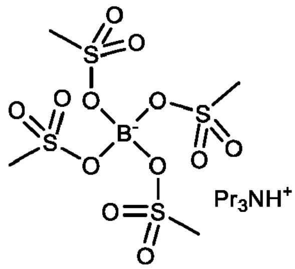

Dans un ballon de 100 mL, est introduit l'acide borique (1 éq., 5,20 mmol) auquel est ajouté 70 mL de THF. Après 30 min à température ambiante, est ajouté l'acide méthanesulfonique (4 éq., 20,81 mmol). La réaction est maintenue à température ambiante pendant 2 h. Une solution de tripropylamine (1 éq., 5,20 mmol) dans 10 mL de THF est ajoutée au mélange et ce dernier est agité durant 2h. Le THF est alors évaporé. Une huile légèrement brune est obtenue avec un rendement de 99 % (2,75 g).

RMN $^1$H (400 MHz, DMSO-$d_6$) δ ppm 0,71 - 0,85 (m, 9 H), 1,42 - 1,56 (m, 6 H), 2,34 (s, 12 H), 2,70 - 2,96 (m, 6 H) ; RMN $^{13}$C (101 MHz, DMSO-$d_6$) δ ppm 11,3, 17,0, 40,1, 54,0.

*1.18 Composé B25*

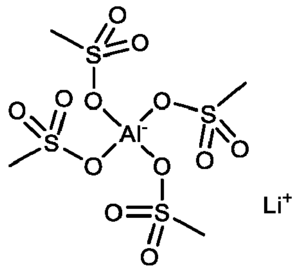

Dans un ballon de 100 mL, sont introduits l'hydroxyde d'aluminium (1 éq., 12,82 mmol) et 70 mL de toluène. Sont ensuite ajoutés l'acide méthanesulfonique (4 éq., 51,28 mmol) et le carbonate de lithium (0,5 éq., 6,41 mmol). Le mélange obtenu est hétérogène et sans dégagement gazeux observé. La réaction est maintenue pendant 5 h à reflux avec l'aide d'un appareil de type Dean-Stark. Après évaporation du solvant et séchage pendant une nuit sous vide, une poudre blanche est obtenue avec un rendement de 98 % (5,22 g).

RMN $^1H$ (400 MHz, DMSO-$d_6$) $\delta$ ppm 2,39 (s, 12 H).

*1.19 Composé C2*

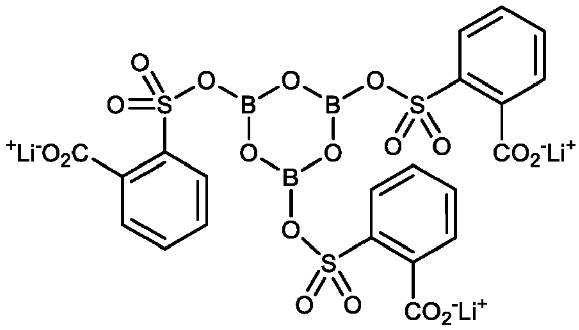

De l'acide borique (3 éq., 4,95 mmol), de l'acide sulfobenzoïque (3 éq., 4,95 mmol) et 60 mL de toluène sont successivement introduits sans un ballon de 100 mL muni d'un dispositif de type Dean-Stark. Du $Li_2CO_3$ (1,5 éq., 2,47 mmol) est ensuite ajouté, résultant en un dégagement gazeux. Après 30 min, le mélange est porté à reflux pendant 5 h et un précipité blanc se forme.

Après retour à température ambiante, le surnageant est éliminé par filtration et le produit est séché sous vide pendant 3 h. Une poudre blanche est obtenue avec un rendement de 96 % (1,1 g).

RMN $^1H$ (400 MHz, DMSO-$d_6$) $\delta$ ppm 7,46 - 7,57 (m, 6 H), 7,71 - 7,77 (m, 3 H), 7,82 - 7,87 (m, 3 H) ; RMN $^{11}B$ (128 MHz, DMSO-$d_6$) $\delta$ ppm 1,41 ; RMN $^{13}C$ (101 MHz, DMSO-$d_6$) $\delta$ ppm 127,1, 130,2, 131,1, 131,4, 144,6.

*1.20 Composé C3*

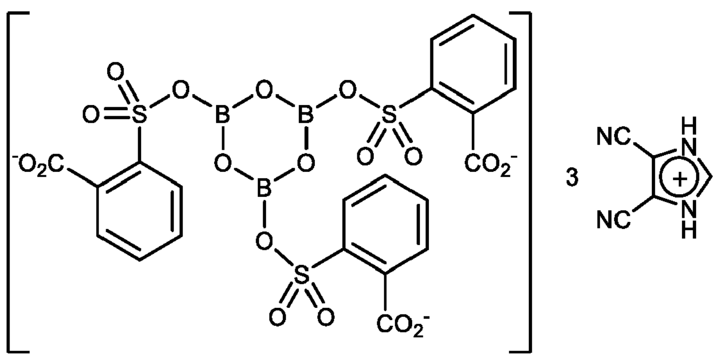

Dans un ballon de 100 mL, est introduit l'acide borique (3 éq., 16,17 mmol) auquel est ajouté 70 mL de toluène. Après 30 min à température ambiante, sont ajoutés l'acide sulfobenzoïque (3 éq., 16,17 mmol) et le *1H*-imidazole-4,5-dicarbonitrile (3 éq., 16,17 mmol). Le montage est ensuite surmonté d'un dispositif de type Dean-Stark. Après chauffage du mélange à reflux pendant 5 h, le toluène est évaporé et un solide blanc est obtenu avec un rendement de 99 % (5,50 g).
RMN $^1H$ (400 MHz, DMSO-$d_6$) $\delta$ ppm 7,46 - 7,61 (m, 6 H), 7,72 - 7,80 (m, 3 H), 7,81 - 7,88 (m, 3 H), 8,32 (s, 3 H).

*1.21 Composé C5*

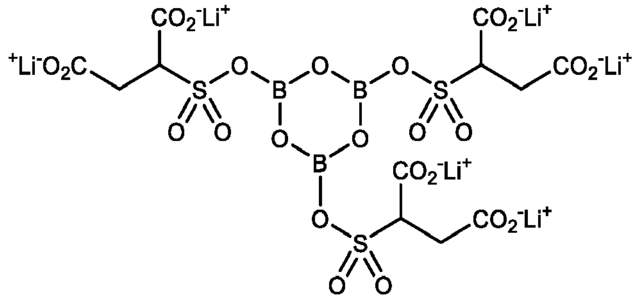

De l'acide borique (1 éq., 7.07 mmol), de l'acide sulfosuccinimique (1 éq., 7.07 mmol) et 60 mL de toluène sont introduits dans un ballon de 100 mL muni d'un Dean-Stark. Du $Li_2CO_3$ (1 éq., 7.07 mmol) est ensuite ajouté, résultant en un dégagement gazeux. Après 30 min, le mélange est porté à reflux pendant 5 h et un précipité blanc se forme. Après retour à température ambiante, le surnageant est éliminé par filtration et le produit est séché sous vide pendant 3 h. Une poudre est obtenue avec un rendement de 92 % (1,525 g).
RMN $^1H$ (400 MHz, DMSO-$d_6$) $\delta$ ppm 2,62 - 2,72 (m, 3 H), 2,82 - 2,72 (m, 3 H), 3,45 - 3,64 (m, 3 H) ; RMN $^{11}B$ (128 MHz, DMSO-$d_6$) $\delta$ ppm 1,39 ; RMN $^{13}C$ (101 MHz, DMSO-$d_6$) $\delta$ ppm 35,1, 63,1, 171,5, 173,7.

*1.22 Composé C7*

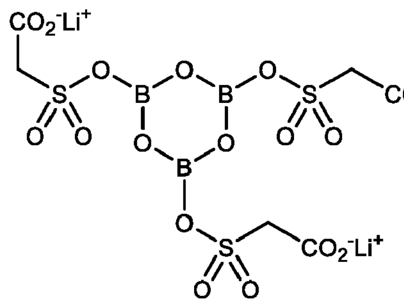

De l'acide borique (3 éq., 5,28 mmol), 60 mL de toluène, puis de l'acide sulfoacétique (3 éq., 5,28 mmol) et du $Li_2CO_3$ (1.5 éq., 2,64 mmol) sont successivement introduits dans un ballon de 100 mL muni d'un Dean-Stark. Le milieu est maintenu à température ambiante pendant 2 h puis porté à reflux pendant 5 h. Après retour à température ambiante, un précipité est observé. Le surnageant est éliminé par filtration et le produit est séché sous vide pendant 3 h. Une poudre blanche est obtenue avec un rendement de 99 % (0,9 g).
RMN $^1H$ (400 MHz, DMSO-$d_6$) $\delta$ ppm 3,41 (s, 6 H) ; RMN $^{11}B$ (128 MHz, DMSO-$d_6$) $\delta$ ppm 1.40 ; NMR $^{13}C$ (101 MHz, DMSO-$d_6$) $\delta$ ppm 57,5, 167,9.

*1.23 Composé C9*

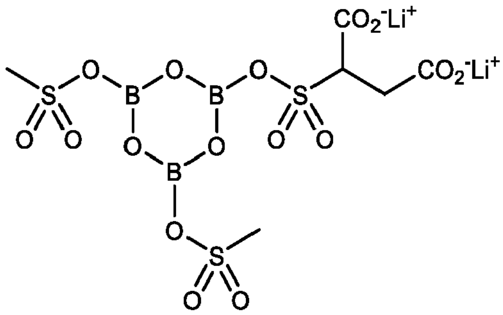

De l'acide borique (3 éq., 16.17 mmol) et 60 mL de toluène, puis de l'acide sulfosuccinimique (1 éq., 5,39 mmol), de l'acide méthanesulfonique (2 éq., 10,78 mmol) et du $Li_2CO_3$ (1 éq., 2,70 mmol) sont introduits successivement dans un ballon de 100 mL muni d'un Dean-Stark. Le mélange réactionnel est maintenu à température ambiante pendant 2 h puis porté à reflux pendant 5 h. Après retour à température ambiante, un précipité est observé. Le surnageant est alors éliminé par filtration et le produit est séché à la pompe sous vide pendant 3 h. Une poudre blanche est obtenue avec un rendement de 95 % (2,45 g).

RMN $^1H$ (400 MHz, DMSO-$d_6$) $\delta$ ppm 2,39 (s, 6 H), 2,61 - 2,73 (m, 1 H), 2,74 - 2,86 (m, 1 H), 3,54 - 3,67 (m, 1 H) ; RMN $^{11}B$ (128 MHz, DMSO-$d_6$) $\delta$ ppm 2,73 ; RMN $^{13}C$ (101 MHz, DMSO-$d_6$) $\delta$ ppm 34,5, 40,2, 62,0, 170,1, 173,3.

*1.24 Composé C10*

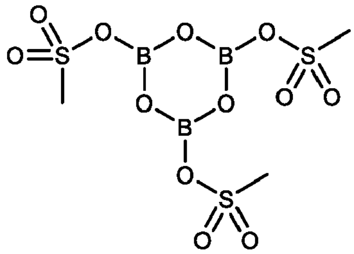

L'acide borique (1 éq., 16,17 mmol), 60 mL de toluène, et l'acide méthanesulfonique (1 éq., 16,17 mmol) sont introduits successivement dans un ballon de 100 mL muni d'un Dean-Stark. Le mélange est porté à reflux pendant 5 h. Un précipité jaune se forme. Après retour à température ambiante, le surnageant est éliminé par filtration et le produit est séché sous vide pendant 3 h. Un solide jaune est obtenu avec un rendement de 81 % (1,60 g).

RMN $^1H$ (400 MHz, DMSO-$d_6$) $\delta$ ppm 2,46 (s, 9 H) ; RMN $^{11}B$ (128 MHz, DMSO-$d_6$) $\delta$ ppm 2,96 ; RMN $^{13}C$ (101 MHz, DMSO-$d_6$) $\delta$ ppm 40,2.

*1.25 Composé C11*

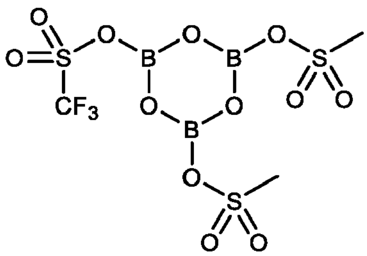

De l'acide borique (3 éq., 16,17 mmol), 60 mL de toluène, puis successivement de l'acide méthanesulfonique (2 éq., 10,78 mmol) et de l'acide triflique (1 éq. 5,39 mmol) sont introduits dans un ballon de 100 mL muni d'un Dean-Stark. Le mélange est maintenu à température ambiante pendant 2h puis porté à reflux pendant 5 h. Un précipité jaune se forme. Après retour à température ambiante, le surnageant est éliminé par filtration et le produit est séché sous vide pendant 3 h. Un solide jaune est obtenu avec un rendement de 88 % (2,00 g).

RMN $^{1}H$ (400 MHz, DMSO-$d_6$) δ ppm 2,52 (s, 6 H) ; RMN $^{11}B$ (128 MHz, DMSO-$d_6$) δ ppm 2,63 ; RMN $^{19}F$ (376 MHz, DMSO-$d_6$) δ ppm -77,81 ; RMN $^{13}C$ (101 MHz, DMSO-$d_6$) δ ppm 40,1.

*1.26 Composé C12*

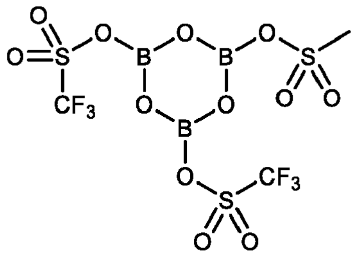

L'acide borique (3 éq., 16,17 mmol), 60 mL de toluène puis, successivement, l'acide méthanesulfonique (1 éq., 5,39 mmol) et l'acide triflique (2 éq., 10,78 mmol) sont introduits dans un ballon de 100 mL muni d'un Dean-Stark. Le mélange est maintenu à température ambiante pendant 2h puis porté à reflux pendant 5 h. Après retour à température ambiante, le surnageant est retiré par filtration et le solide obtenu est séché sous vide pendant 3 h. Un solide jaune est obtenu avec un rendement de 67 % (1,70 g).

RMN $^{1}H$ (400 MHz, DMSO-$d_6$) δ ppm 2,47 (s, 3 H) ; RMN $^{11}B$ (128 MHz, DMSO-$d_6$) δ ppm 2,95 ; RMN $^{19}F$ (376 MHz, DMSO-$d_6$) δ ppm -77,81 ; RMN $^{13}C$ (101 MHz, DMSO-$d_6$) δ ppm 40,2.

*1.27 Composé C13*

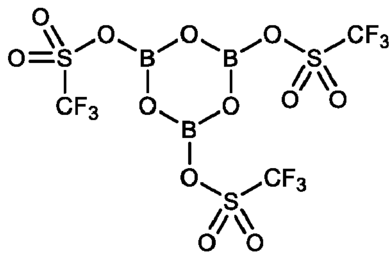

L'acide borique (16,17 mmol), 60 mL de toluène, et l'acide triflique (16,17 mmol) sont introduits dans un ballon de 100 mL muni d'un Dean-Stark. Le mélange est maintenu à température ambiante pendant 2h puis porté à reflux pendant 4 h. Un précipité jaune se forme. Après retour à température ambiante, le surnageant est éliminé par filtration et le produit est séché sous vide pendant 3 h. Un solide jaune est obtenu avec un rendement de 84 % (2,39 g).

RMN $^{11}B$ (128 MHz, DMSO-$d_6$) δ ppm 2,96 ; RMN $^{19}F$ (376 MHz, DMSO-$d_6$) δ ppm -77,80 ; RMN $^{13}C$ (101 MHz, DMSO-$d_6$) δ ppm 121,1.

*1.28 Composé C14*

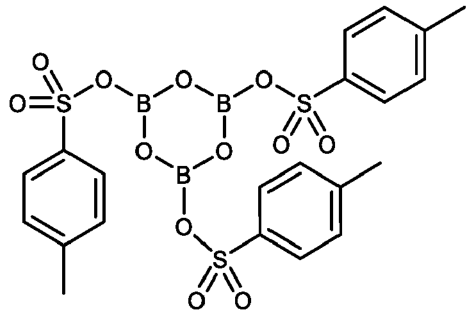

De l'acide p-toluènesulfonique (16,17 mmol), de l'acide borique (16,17 mmol) et 60 mL de toluène sont introduits dans un ballon de 100mL muni d'un Dean-Stark. Le mélange est porté à reflux pendant 5 h. Un précipité marron se forme. Après retour à température ambiante, le surnageant est éliminé par filtration et le produit est séché sous vide pendant 3 h. Une poudre de couleur marron est obtenue avec un rendement de 98 % (3,10 g).

RMN $^{1}H$ (400 MHz, DMSO-$d_6$) δ ppm 2,30 (s, 9 H), 7,04 - 7,34 (m, 6 H), 7,51 (d, *J*=8,07 Hz, 6 H); RMN $^{11}B$ (128 MHz, DMSO-$d_6$) δ ppm 2,89 ; RMN $^{13}C$ (101 MHz, DMSO-$d_6$) δ ppm 21,3, 125,9, 128,7, 138,7, 145,3.

<u>*1.29 Composé C15*</u>

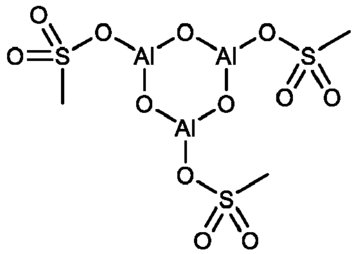

Dans un ballon de 100 mL, sont introduits l'hydroxyde d'aluminium (3 éq., 25,64 mmol) et 70 mL de toluène. L'acide méthanesulfonique (3 éq., 25,64 mmol) est ensuite ajouté et la réaction est maintenue pendant 5 h à reflux à l'aide d'un appareil de type Dean-Stark. Après évaporation du solvant et séchage pendant une nuit sous vide, une poudre blanche est obtenue avec un rendement de 99 % (3,50 g).

RMN $^{1}H$ (400 MHz, DMSO-$d_6$) δ ppm 2,35 (s, 9 H).

<u>*1.30 Composé C16*</u>

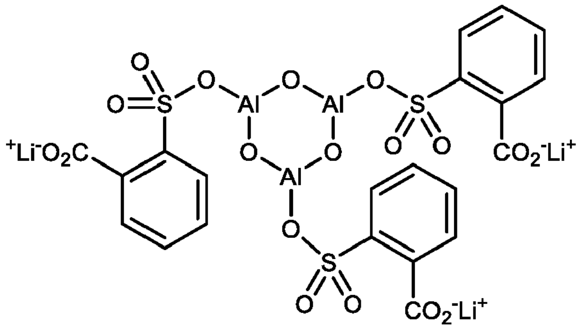

Dans un ballon de 100 mL muni d'un appareil de type Dean-Stark, sont introduits l'hydroxyde d'aluminium (3 éq., 25,64 mmol) et 70 mL de toluène. L'acide sulfobenzoïque (3 éq., 25,64 mmol) et le carbonate de lithium (1,5 éq., 12.82 mmol) sont ensuite ajoutés. La réaction est maintenue pendant 5 h à reflux. Après évaporation du solvant et

séchage pendant une nuit sous vide, une poudre blanche est obtenue avec un rendement de 97 % (6,21 g).
RMN $^1H$ (400 MHz, DMSO-$d_6$) δ ppm 7,38 - 7,48 (m, 6 H) 7,57 - 7,70 (m, 3 H) 7,75 - 7,86 (m, 3 H).

**Exemple 2** - **Solubilité dans des matrices polymères**

La solubilité de composés borés selon la présente demande est évaluée dans des polymères, le but étant d'évaluer l'utilisation un polymère comme solvant (solide) de ces composés borés. La solubilité de quelques sels à base de bore contenant du lithium est alors testée. Les sels de bore, dans ce cas, ne servent pas d'additif d'électrolytes mais de sel de lithium. Trois composés testés (voir plus bas) se sont avérés solubles dans les polymères étudiés.
Les polymères utilisés comme matrice dans cette étude (voir Figure 1) sont des exemples de polymères usuellement utilisés dans les électrolytes polymères. Les polymères testés incluent un homopolymère fabriqués à partir de macromonomères acrylate de polyéthylène glycol, et un copolymère de poly(éthylène glycol) (pour la conductivité) et de polystyrène (PS, pour la tenue mécanique). Ces polymères sont synthétisés en laboratoire par polymérisation radicalaire contrôlée. Le PAcrPEG480 (voir Figure 1b, ci-après P.I) est un homopolymère synthétisé à partir du macromonomère AcrPEG480 (voir Figure 1a, $M_n$ = 480 g/mol), alors que le copolymère di-bloc PAcrPEG480-*b*-PS (voir Figure 1c, ci-après P.II) est synthétisé à partir d'un PAcrPEG480 utilisé ici comme macroamorceur et de polystyrène.
Les caractéristiques des polymères sont déterminées par spectroscopie RMN du proton et sont répertoriées dans le Tableau 1.

Tableau 1. Caractéristiques de P.I et P.II utilisés

| | $M_n$[a] (g/mol) | $DP_{n,PAcrPEG}$[b] | $DP_{n,PS}$[c] | $f_{PS}$[d] (%) |
|---|---|---|---|---|
| **P.I** | **33100** | 68 | 0 | **0** |
| **P.II** | **30100** | 50 | 54 | **16** |

**a.** Masse molaire moyenne en nombre du (co)polymère déterminée par RMN $^1H$ dans $CDCl_3$

$$M_n = [DP_{n,PAcrPEG480}] \times M_{AcrPEG480} + [DP_{n,PS}] \times M_{styrène} + M_{amorceur}$$

**b.** Degré de polymérisation moyen en nombre du bloc PAcrPEG480
**c.** Degré de polymérisation moyen en nombre du bloc PS
**d.** Fraction massique du bloc PS

Les solutions à base d'électrolyte polymère sont préparées en boîte à gants sous atmosphère d'argon. Avant d'être placés en boîte à gants, les polymères sont lyophilisés puis séchés sous vide à 70 °C pendant au minimum 48 h afin d'éliminer toute trace d'eau. Le solvant DMSO utilisé pour préparer les solutions à base d'électrolyte polymère est anhydre et de haute pureté (99.8+% sous Ar) et est placé sous tamis moléculaire. Dans un flacon de 5 mL, sont introduits le polymère (P.I ou P.II, voir Tableau 1), le sel et le solvant. Le mélange est laissé agiter au minimum 72 h à 40 °C. La concentration massique en polymère dans la solution est fixée à environ 11 - 12 %. Les quantités de polymère, de sel et de solvant sont données dans les tableaux 2 à 6. Ces quantités correspondent à différents ratios d'unité d'oxyde éthylène sur l'ion lithium : [OE]/[$Li^+$].
Dans le cas des électrolytes polymères à base de LiTFSI (comparatif), la marche à suivre diffère, notamment, par le solvant utilisé qui est ici le THF. Le THF utilisé est préalablement distillé sur sodium et benzophénone et sous atmosphère inerte. Il est ensuite placé sur tamis moléculaire avant d'être introduit dans une boîte à gants. Une fois les solutions préparées, elles sont placées sous agitation à température ambiante pendant au minimum 24 h. La concentration massique en polymère est fixée à environ 17 %. Les quantités de polymère, de sel et de solvant sont données dans le Tableau 6. Ces quantités correspondent à différents ratios d'unité d'oxyde éthylène en fonction de l'ion lithium, [OE]/[$Li^+$].

Tableau 2. Solutions d'électrolyte polymère P.I / Composé A5

| | **masse** (g) | **[ ]** (wt%) | **[OE]/[Li⁺]** |
|---|---|---|---|
| **P.I** | 0,138 | **11,7** | **13** |
| **Composé A5** | 0,0215 | **1,8** | |
| **DMSO** | 1,025 | - | |

(suite)

| | **masse** (g) | **[ ]** (wt%) | **[OE]/[Li+]** |
|---|---|---|---|
| **P.I** | 0,2426 | **10,9** | **29** |
| **Composé A5** | 0,0169 | **0,76** | |
| **DMSO** | 1,97 | - | |

Tableau 3. Solutions d'électrolyte polymère P.I / Composé C5

| | **masse** (g) | **[ ]** (wt%) | **[OE]** / **[Li+]** |
|---|---|---|---|
| **P.I** | 0,0203 | **11,4** | **28** |
| **Composé C5** | 0,2583 | **0,9** | |
| **DMSO** | 1,98 | - | |

Tableau 4. Solutions d'électrolyte polymère P.I / Composé C2

| | **masse** (g) | **[ ]** (wt%) | **[OE]** / **[Li+]** |
|---|---|---|---|
| **P.I** | 0,2533 | **11,1** | **31,5** |
| **Composé C2** | 0,0353 | **1,54** | |
| **DMSO** | 2,00 | - | |

Tableau 5. Solutions d'électrolyte polymère P.II / Composé A5

| | **masse** (g) | **[ ]** (wt%) | **[OE]** / **[Li+]** |
|---|---|---|---|
| **P.II** | 0,130 | **11,0** | **12,8** |
| **Composé A5** | 0,0212 | **1,8** | |
| **DMSO** | 1,03 | - | |
| **P.II** | 0,251 | **11,0** | **31,9** |
| **Composé A5** | 0,0135 | **0,6** | |
| **DMSO** | 2,02 | - | |

Tableau 6. Solutions d'électrolyte polymère P.I / LiTFSI

| | **masse** (g) | **[ ]** (wt%) | **[OE]** / **[Li+]** |
|---|---|---|---|
| **P.I** | 0,2664 | **16,8** | **33** |
| **LiTFSI** | 0,0434 | **2,7** | |
| **THF** | 1,275 | - | |
| **P.I** | 0,2454 | **17,5** | **10** |
| **LiTFSI** | 0,1325 | **9,5** | |
| **THF** | 1,022 | - | |

Les trois composés borés A5, C2 et C5 testé sont solubles dans P.I et P.II. Pour fins de comparaison, des électrolytes polymères à base du sel LiTFSI, sel usuellement utilisé dans les électrolytes polymères, ont aussi été préparés dans les polymères P.I et P.II. Les résultats de ceux-ci sont présentés au Tableau 6.

**Exemple 3** - **Préparation de compositions d'électrolytes**

Des compositions comprenant les Composés B2, C10, C11, C12 et C13 à une concentration de 0,5 % massique ont donc été préparées dans une solution 1 M de $LiPF_6$ dans du carbonate d'éthylène et du carbonate de diéthyle (EC/DEC, 3/7 (v/v)). Des compositions sans additif et d'une concentration de 1 M en $LiPF_6$ ou LiTFSI dans le même mélange de carbonates ont aussi été préparées pour fins de comparaisons. Ces compositions d'électrolytes sont utilisées dans les exemples qui suivent.

**Exemple 4** - **Évaluation électrochimique**

*4.1 Test de corrosion de l'aluminium*

Ce test sert à vérifier que les solutions d'électrolyte comprenant les présents composés ne corrodent pas l'aluminium (collecteur de courant usuel de cathodes). Les résultats obtenus sont comparés à une composition comprenant le sel LiTFSI, lequel comprend un groupement bis(sulfonyl)imide. D'ailleurs, ce sel est reconnu comme étant corrosif vis-à-vis l'aluminium lorsque ce dernier est utilisé comme collecteur de courant.

*Préparation d'une demi-pile bouton aluminium :*

Dans un grand capot, les éléments de la demi-pile sont disposés dans l'ordre suivant :

- Cale de 0,5 mm en acier inoxydable
- Électrode à tester (pastille d'aluminium)
- Séparateur (Celgard)
- Électrolyte (200 $\mu$L)
- Joint
- Pastille de Li Métal
- Cale de 1 mm en acier inoxydable
- Ressort

La demi-pile est ensuite fermée à l'aide du petit capot puis celle-ci est sertie. La demi-pile est ensuite nettoyée à l'éthanol afin d'enlever les débordements d'électrolyte.

*Tests électrochimiques :*

La demi-pile est testée à l'aide d'un cycleur de type VMP3. Afin de vérifier la corrosion de l'aluminium par le composé utilisé comme additif, une évaluation par chronoampérométrie est effectuée par l'application d'un potentiel de 4,4 V sur la pile-bouton pendant 1 h. Les résultats sont illustrés à la Figure 2. Les composés testés sont évalués en tant qu'additifs à $LiPF_6$. Les sels $LiPF_6$ et LiTFSI sont aussi testés seul, afin de comparer les résultats à ceux obtenus avec les électrolytes comprenant les nouveaux additifs synthétisés. En effet il est connu que $LiPF_6$ ne corrode pas l'aluminium, contrairement à LiTFSI. Les tests réalisés confirment la non-corrosion de l'aluminium par $LiPF_6$ et sa corrosion par LiTFSI. Les tests démontrent aussi que les composés testés en tant qu'additif à $LiPF_6$ ne corrodent pas l'aluminium.

*4.2 Évaluation en demi-piles vs. lithium*

Dans un grand capot, les éléments de la demi-pile sont disposés dans l'ordre suivant :

- cale de 0,5 mm en acier inoxydable
- Électrode à tester (cathode ou anode)
- Séparateur Celgard 3501[MC]
- Électrolyte selon l'Exemple 3 (200 $\mu$L)
- Joint
- Pastille de Li métallique
- Cale de 1 mm en acier inoxydable
- Ressort

La demi-pile est ensuite fermée à l'aide du petit capot puis celle-ci est sertie. La demi-pile est ensuite nettoyée à l'éthanol afin d'enlever les débordements d'électrolyte. La demi-pile est imprégnée pendant 2 h avant de démarrer les

tests électrochimiques.

*Demi-piles boutons NMC-Li*

Les demi-piles sont montées comme ci-dessus, en utilisant des électrolytes préparés selon l'Exemple 3, où les Composés C10 et C13 sont utilisés comme additifs. Pour fins de comparaisons, une demi-pile a aussi été préparée à partir de l'électrolyte contenant $LiPF_6$ sans additif (voir Exemple 3) et évaluée dans les mêmes conditions.
Les électrodes utilisées dans les demi-piles sont les suivantes :

- Cathode : $LiNi_{1/3}Mn_{1/3}Co_{1/3}O_2$ (NMC) : noir de carbone (Denka) : VGCF-H (Showa Denko) : PVDF (Kureha KF-7305™) dans un ratio en poids de 89:3:3:5, épandage réalisé sur un applicateur industriel par une méthode de type transfert d'encre à partir de rouleaux (densité de charge = 0,9 mAh/cm$^2$)

- Anode : lithium métallique

- Echelle de potentiel : 3 - 4,4 V

*Tests électrochimiques :*

Les demi-piles sont testées à l'aide d'un potentiostat/galvanostat de type $VMP_3$™ à 25°C (étuve thermostatée). On procède alors à une formation en 2 cycles dont un cycle correspond à la description suivante :

- Une charge en 24 h (C/24) entre 3 V et 4,4 V
- Une décharge en 24 h (D/24) entre 4,4 V et 3 V
- Une fois la pile formée (2 cycles) on la lance en stabilité

Le cycle de stabilité suivant est répété jusqu'à une perte de 20% en capacité par rapport à celle récupérée à la fin de la première décharge du cycle de stabilité :

- Une charge en 4 h (C/4) entre 3 V et 4,4 V
- Un repos de 10 s
- Une décharge en 1 h (D) entre 4,4 V et 3 V
- Un repos de 10 s

Les résultats obtenus sont rapportés à la Figure 3. Si on considère la fin de vie d'une batterie lorsque celle-ci a perdu 20 % de la capacité récupérée à la fin de la première décharge du cycle de stabilité, l'ajout de seulement 0,5 % des additifs C10 ou C13 permet d'améliorer la durée de vie de la batterie d'environ 1,8 fois, passant alors d'environ 190 cycles sans additif à 340 cycles avec l'ajout de ce dernier.

*4.3 Évaluation dans des piles lithium-ion*

Les Composés C10 et C13 sont ensuite évalués comme additifs dans des compositions d'électrolyte pour usage dans des batteries lithium-ion. Le matériau actif de cathode utilisé est le $LiMn_{3/2}Ni_{1/2}O_4$ (LMN). Le matériau actif d'anode est le $Li_4Ti_5O_{12}$ (LTO), celui-ci étant l'entité limitante lors du cyclage de la pile.
La cathode comprend les éléments suivants : LMN, noir de carbone, VGCF-H, et PVDF, dans un ratio en poids de 89:3:3:5 (densité de charge : 0.9 mAh/cm$^2$). L'anode comprend, dans le même ratio en pondéral, les éléments : LTO, noir de carbone, VGCF-H, et PVDF (densité de charge : 0.95 mAh/cm$^2$).
Les électrolytes utilisés sont préparés suivant la procédure décrite à l'Exemple 3 et le séparateur utilisé est un séparateur Celgard$^{MC}$ Q20S1 HX avec enrobage de céramique. Une pile utilisant une solution 1M de $LiPF_6$ sans additif dans EC/DEC (3:7, v/v) est aussi évaluée pour fins de comparaison.
Les piles sont ensuite cyclées à 25°C avec des bornes de cyclage de 2 à 3,4V. La formation des piles est d'abord effectuée en 3 cycles C/24-C/24. La stabilité des piles est ensuite testée par cyclage en C/4. Les résultats obtenus sont présentés à la Figure 4. Ces résultats démontrent que l'ajout de 0,5 % massique d'additif améliore considérablement la durée de vie de la pile. En effet, sans additif la capacité diminue de 20 % après 160 cycles seulement. En comparaison, lorsqu'une composition d'électrolyte comprenant seulement 0,5 % des additifs C10 ou C13 dans une solution 1 M de $LiPF_6$ dans EC/DEC (3:7) est utilisée, une diminution de capacité de seulement 5 % est observée après plus de 200 cycles.
En somme, la présente demande décrit des composés permettant l'utilisation de matériaux de cathode à haut

voltage, afin de gagner en capacité et en densité massique. En effet, un voltage de 4,4 V est considéré comme un haut voltage pour une cathode NMC de type 1/3 1/3 1/3, usuellement cyclé seulement jusqu'à 4,2 V. La quantité et le choix de l'additif pourraient être ajustés, optimisés ou adaptés selon le matériau utilisé.

La quantité optimale à ajouter de ces nouveaux additifs peut être ajustée afin d'améliorer de manière encore plus significative la durée de vie des batteries. Par exemple, un matériau de cathode de très haut voltage tel le LMN, aussi évalué ici, permet un cyclage jusqu'à 4,9 V, peut être utilisé. Il existe donc un intérêt pour l'utilisation de ces nouveaux additifs dans les systèmes à hauts voltage.

D'autres matériaux d'anode standard comme le graphite et le LTO (ici aussi évalué) peuvent aussi être utilisés. La présente description confirme aussi la bonne compatibilité des présents additifs avec ce dernier.

De nombreuses modifications pourraient être effectuées à l'un ou l'autre des modes de réalisation ci-dessus mentionnés sans sortir du cadre de la présente invention. Les références, brevets ou documents de littérature scientifique mentionnés dans la présente demande sont incorporés ici à titre de référence dans leur intégralité et à toutes fins.

## Revendications

1. Composé de Formule III, et/ou ses sels :

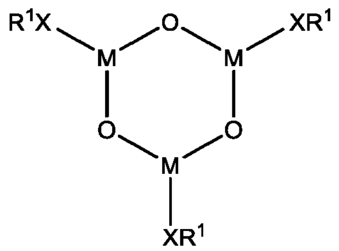

Formule III

dans laquelle :

M est choisi parmi un atome d'aluminium, de gallium, d'indium ou de thallium, de préférence d'aluminium, de gallium ou d'indium ;
X est indépendamment choisi parmi O, S, NH, NR, ou un groupe C(O)O ou $S(O)_2O$, où ledit groupe C(O)O ou $S(O)_2O$ est attaché à M par un atome d'oxygène ;
R est indépendamment choisi parmi les groupes substitués ou non substitués alkyle linéaire ou ramifié, cycloalkyle et aryle ; et
$R^1$ est indépendamment choisi parmi les groupes substitués ou non substitués alkyle linéaire ou ramifié, cycloalkyle et aryle.

2. Composé selon la revendication 1, dans lequel au moins un groupement X est un groupe C(O)O ou $S(O)_2O$.

3. Composé selon la revendication 2, dans lequel au moins un groupement X est un groupe $S(O)_2O$.

4. Composé selon la revendication 3, dans lequel tous les groupements X liés à M sont des groupes $S(O)_2O$.

5. Composé selon l'une quelconque des revendications 1 à 4, dans lequel M est un atome d'aluminium.

6. Composé selon l'une quelconque des revendications 1 à 5, dans lequel $R^1$ est indépendamment choisi parmi les groupes alkyle, cycloalkyle ou aryle substitués par au moins un groupement choisi parmi OH, $NH_2$, $N(R^2)H$, $N(R^2)_2$, C(O)OH et $SO_3H$, ou un sel de ceux-ci lorsqu'applicable, et $R^2$ est choisi parmi les groupes alkyle, cycloalkyle ou aryle optionnellement substitués.

7. Composé selon la revendication 6, dans lequel le sel est formé d'un ion $C(O)O^-$ ou $SO_3^-$ et d'un cation $A^+$, où $A^+$ est un cation métallique ou un cation d'une base organique.

8. Composé selon la revendication 7, dans lequel $A^+$ est un cation métallique choisi parmi les cations des éléments

Li, Na, K, Rb, Cs, Be, Mg, Ca, Sr, Ba, Al, Zn, Cu, Sc, Y, Fe, Co, Ni, Ti, Sn, V, Cr, et Mn, de préférence $A^+$ est un cation d'un métal alcalin ou alcalino-terreux, notamment $Li^+$, $Na^+$, $K^+$, $Rb^+$, $Cs^+$, $Be^{2+}$, $Mg^{2+}$, $Ca^{2+}$, $Sr^{2+}$, et $Ba^{2+}$, de préférence $A^+$ est $Li^+$.

**9.** Composé selon la revendication 7, dans lequel $A^+$ est choisi parmi les cations ammonium, alkylammonium, dialkylammonium, trialkylammonium, tétraalkylammonium, triarylammonium, tricycloalkylammonium, tétracycloalkylammonium, imidazolium, 1,3-dialkylimidazolium, 4,5-dicyanoimidazolium, N-alkylpyrrolidinium, N-alkylpipéridinium, oxonium, trialkyloxonium, sulfonium, trialkylsulfonium, triarylsulfonium, tricycloalkylsulfonium, phosphonium, tétraalkylphosphonium, tétraarylphosphonium, tétracycloalkylphosphonium, trialkylphosphonium, triarylphosphonium, tricycloalkylphosphonium, trialkylsélénium, et tétraalkylarsonium, de préférence $A^+$ est un cation d'une base organique choisie parmi la triméthylamine, triéthylamine, tripropylamine, tributylamine, N-alkylpyrrolidine, N-alkylmorpholine, *N*-méthylimidazole, 4,5-dicyanoimidazole, pyridine, picoline, lutidine, quinoline, *N,N*-diméthylaniline, diisopropyléthylamine, quinuclidine, et triméthylphosphine.

**10.** Composé selon la revendication 1, lequel est choisi parmi :

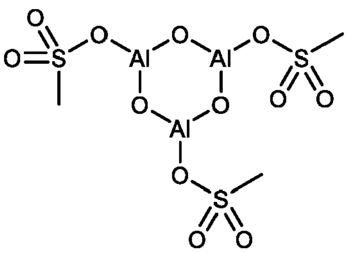

et

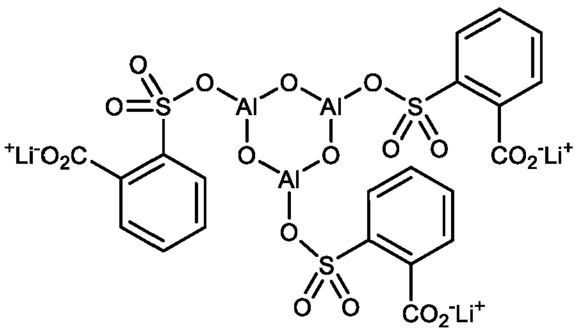

.

**11.** Procédé de préparation d'un composé de Formule III selon l'une quelconque des revendications 1 à 10, comprenant une étape de mise en contact d'un composé de Formule IV :

$M(X')_3$ (IV)

dans laquelle M est tel que défini précédemment;

X' est choisi parmi hydrogène, OH, halogène, notamment F, Cl, ou Br, $C_1$-$C_4$alkyle, O-$C_1$-$C_4$alkyle, par exemple, OMe, OEt, Oi-Pr, $C_1$-$C_4$alkylcarboxylate, sulfate, phosphate, ou un sel du composé de Formule IV;
avec environ un équivalent molaire d'au moins un composé de Formule VI :

$R^1XH$ (VI)

où $R^1$ et X sont tels que définis à la revendication 1.

**12.** Procédé selon la revendication 11, dans lequel le composé de formule IV est $Al(OH)_3$, $AlBr_3$, $AlCl_3$, $Al(OMe)_3$, $Al(OEt)_3$ $Al(Oi\text{-}Pr)_3$, $Al(OC(O)C_2H_5)_3$, $Al(OC(O)CH(CH_3)_2)_3$, $Al(OC(O)CH_3)_3$, $AlPO_4$, $Al_2(SO_4)_3$, $AlMe_3$, $AlEt_3$, $Al(i\text{-}Pr)_3$, $LiAlH_4$ ou $LiAlCl_4$.

**13.** Procédé selon la revendication 11 ou 12, dans lequel le groupe $R^1$ comprend un ou plusieurs groupe(s) $CO_2H$ ou $SO_3H$ additionnel(s) en surplus du groupement XH, et comprend la mise en contact d'un composé de Formule IV avec environ 1 équivalent d'au moins un composé de Formule VI et d'un équivalent molaire de cation $A^+$ sous forme de base par équivalent molaire de groupement $CO_2H$ ou $SO_3H$ additionnel.

**14.** Procédé selon l'une quelconque des revendications 11 à 13, comprenant une étape d'élimination de l'eau, laquelle comprend une étape de chauffage à reflux en présence d'un solvant formant un azéotrope avec l'eau et l'utilisation d'un dispositif permettant le trappage de l'eau, ou comprenant l'utilisation d'un agent desséchant.

**15.** Procédé selon l'une quelconque des revendications 11 à 13, comprenant une étape d'élimination de l'eau, laquelle comprend l'utilisation d'un agent desséchant, de préférence dans lequel la mise en contact s'effectue à une température située entre -78°C et la température d'ébullition du solvant ou du mélange de solvants.

**16.** Utilisation d'un composé tel que défini dans l'une quelconque des revendications 1 à 10, dans une composition d'électrolyte.

**17.** Composition d'électrolyte comprenant un composé tel que défini dans l'une quelconque des revendications 1 à 10, un solvant liquide ou un polymère solvatant, et éventuellement un sel.

**18.** Composition d'électrolyte selon la revendication 17, laquelle est un électrolyte liquide, polymère gel, ou polymère solide.

**19.** Composition d'électrolyte selon la revendication 17 ou 18, laquelle comprend le sel, ledit sel étant de préférence un sel de lithium (ex. $LiPF_6$).

**20.** Cellule électrochimique comprenant une composition d'électrolyte telle que définie dans l'une quelconque des revendications 17 à 19, entre une anode et une cathode.

# FIGURE 1

a) 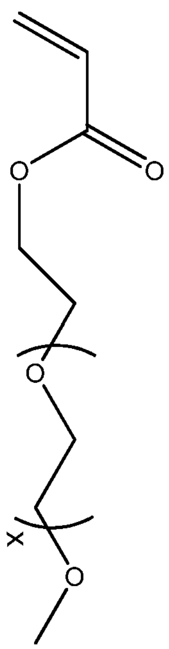

b) 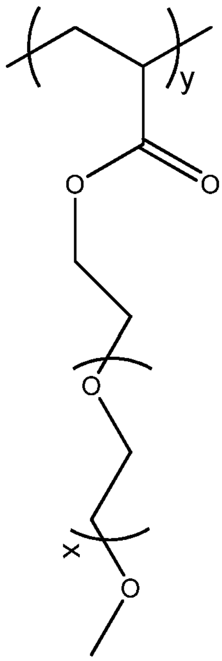

c) 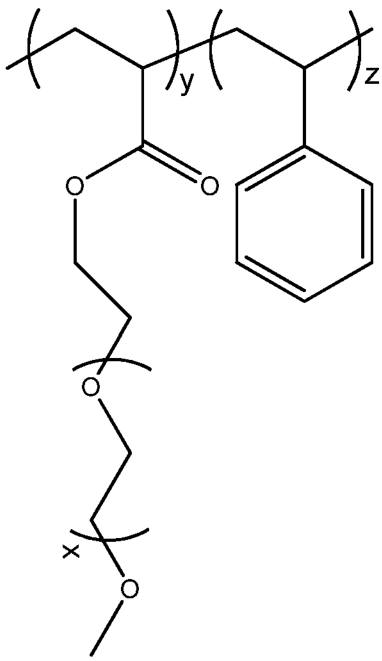

# FIGURE 2

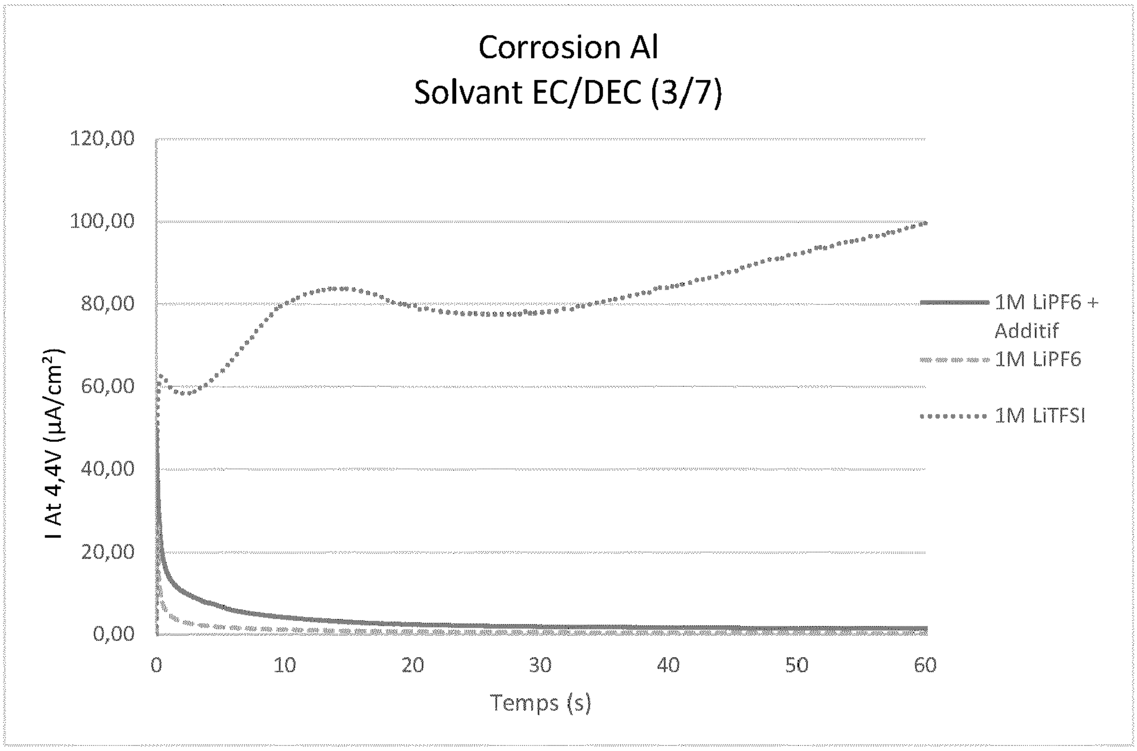
Corrosion Al
Solvant EC/DEC (3/7)
120,00
100,00
80,00
60,00
40,00
20,00
0,00
I At 4,4V (µA/cm²)
0
10
20
30
40
50
60
Temps (s)
1M LiPF6 + Additif
1M LiPF6
1M LiTFSI

# FIGURE 3

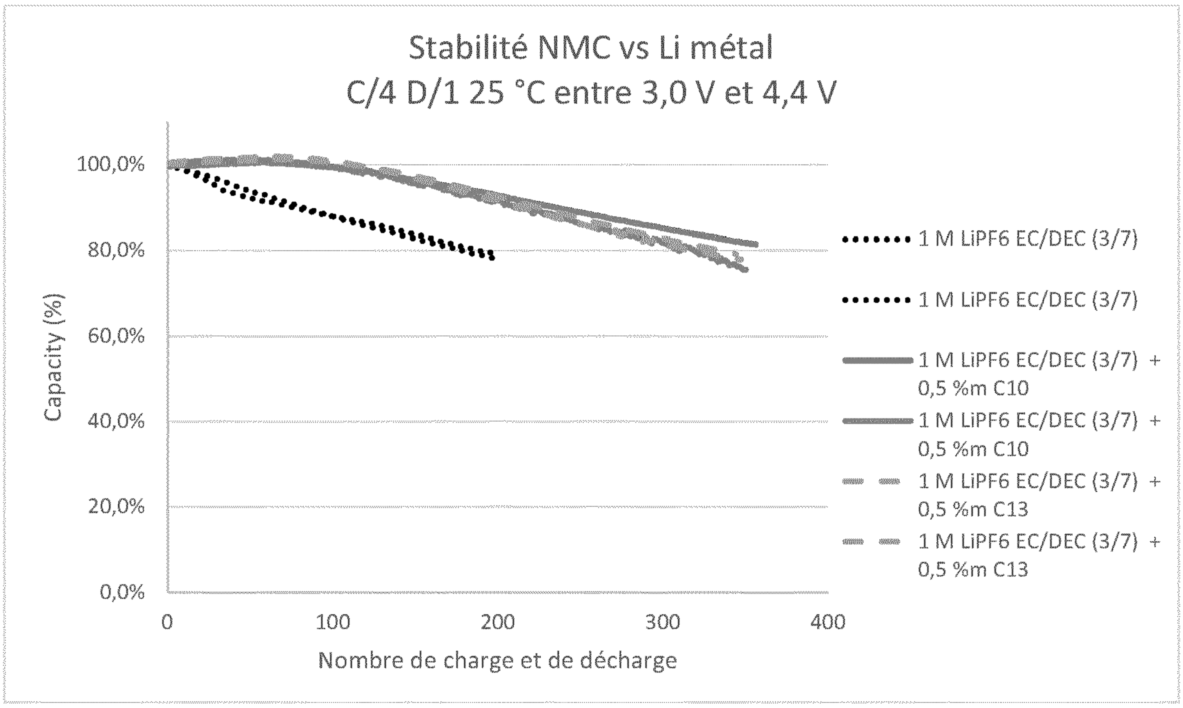
Stabilité NMC vs Li métal
C/4 D/1 25 °C entre 3,0 V et 4,4 V
Capacity (%)
100,0%
80,0%
60,0%
40,0%
20,0%
0,0%
0
100
200
300
400
Nombre de charge et de décharge
1 M LiPF6 EC/DEC (3/7)
1 M LiPF6 EC/DEC (3/7)
1 M LiPF6 EC/DEC (3/7) + 0,5 %m C10
1 M LiPF6 EC/DEC (3/7) + 0,5 %m C10
1 M LiPF6 EC/DEC (3/7) + 0,5 %m C13
1 M LiPF6 EC/DEC (3/7) + 0,5 %m C13

# FIGURE 4

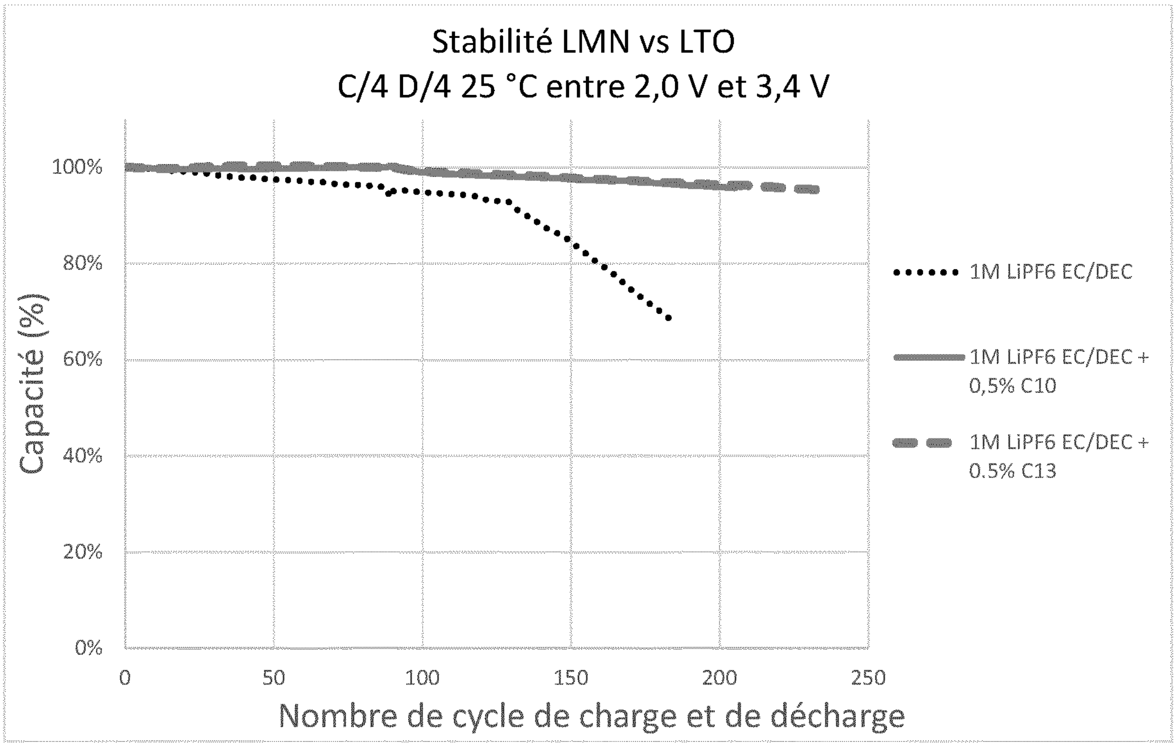
Stabilité LMN vs LTO
C/4 D/4 25 °C entre 2,0 V et 3,4 V
Capacité (%)
100%
80%
60%
40%
20%
0%
0
50
100
150
200
250
Nombre de cycle de charge et de décharge
1M LiPF6 EC/DEC
1M LiPF6 EC/DEC + 0,5% C10
1M LiPF6 EC/DEC + 0.5% C13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CA 2953163

### Littérature non-brevet citée dans la description


- *J. Power Sources,* 2014, vol. 247, 813
- *J. Phys. Chem.,* 2009, vol. 113, 5918
- *J. Electrochem. Soc.,* 1998, vol. 145, 2813
- *J. Electrochem. Soc.,* 1996, vol. 143, 3572
- *J. Am. Chem. Soc.,* 2013, vol. 135, 10990
- *J. Electro. Soc.,* 2014, vol. 161, 2255
- *Electrochem. Comm.,* 2013, vol. 28, 20
- *Electrochemica Acta,* 2015, vol. 173, 804